(19) Europäisches Patentamt
European Patent Office
Office européen des brevets

(11) EP 4 079 533 B1

# (12) EUROPEAN PATENT SPECIFICATION

(45) Date of publication and mention of the grant of the patent:
**27.12.2023 Bulletin 2023/52**

(21) Application number: **20902123.7**

(22) Date of filing: **29.09.2020**

(51) International Patent Classification (IPC):
***B60C 1/00*** *(2006.01)* ***C08L 7/00*** *(2006.01)*
***C08L 15/00*** *(2006.01)* ***C08L 57/02*** *(2006.01)*
***C08L 101/00*** *(2006.01)* ***C08K 3/04*** *(2006.01)*
***C08K 3/36*** *(2006.01)* ***C08C 19/22*** *(2006.01)*
***C08C 19/25*** *(2006.01)* ***C08C 19/44*** *(2006.01)*

(52) Cooperative Patent Classification (CPC):
(C-Sets available)
**C08C 19/22; B60C 1/00; B60C 1/0016; C08C 19/25; C08C 19/44; C08L 7/00;**
C08K 2201/006; Y02T 10/86 (Cont.)

(86) International application number:
**PCT/JP2020/036870**

(87) International publication number:
**WO 2021/124637 (24.06.2021 Gazette 2021/25)**

## (54) TIRE

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2019 JP 2019229804**

(43) Date of publication of application:
**26.10.2022 Bulletin 2022/43**

(73) Proprietor: **BRIDGESTONE CORPORATION**
**Chuo-ku**
**Tokyo 104-8340 (JP)**

(72) Inventors:
- **MIENO, Kana**
  **Tokyo 104-8340 (JP)**
- **OGASAWARA, Takuya**
  **Tokyo 104-8340 (JP)**

(74) Representative: **Marks & Clerk LLP**
**15 Fetter Lane**
**London EC4A 1BW (GB)**

(56) References cited:
**EP-A1- 2 184 317**
**EP-A1- 2 787 032**
**WO-A1-2013/099325**
**WO-A1-2019/116804**
**JP-A- 2010 111 753**
**JP-A- 2018 123 260**
**JP-A- 2019 006 880**
**US-B2- 9 365 703**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 236/10, C08F 4/48;**
**C08L 7/00, C08L 15/00, C08L 57/02, C08K 3/04, C08K 3/36, C08K 5/18, C08K 5/47;**
**C08L 7/00, C08L 15/00, C08L 57/02, C08L 15/00, C08K 3/04, C08K 3/36, C08K 5/18, C08K 5/47;**
C08F 236/06, C08F 212/08

## Description

Technical Field

The present invention relates to a tire.

Background Art

From the viewpoint of enhancing the safety of vehicles, various studies have been conducted in order to enhance the braking characteristics and driving characteristics of tires on dry road surface as well as various road surfaces such as wet road surfaces. For example, as a rubber composition capable of producing a tread rubber having high braking performance on dry road surfaces and having high braking performance even on wet road surfaces of manholes and the like, which are slippery as compared with asphalt, there is disclosed a rubber composition which is prepared by mixing a rubber component (A) including 70% by mass or more of natural rubber, and by mixing 5 to 50 parts by mass of at least one thermoplastic resin (B) selected from a $C_5$-based resin, a $C_5$- to Cg-based resin, a Cg-based resin, a terpene-based resin, a terpene aromatic compound-based resin, a rosin-based resin, a dicyclopentadiene resin, and an alkylphenol-based resin, and 20 to 120 parts by mass of a filler (C) including silica per 100 parts by mass of the rubber component, and in which the silica content in the filler (C) is 50% to 100% by mass (see, for example, PTL 1).

Furthermore, as a rubber composition for tires capable of enhancing the grip performance on dry road surfaces without impairing the grip performance on wet road surfaces, there is disclosed a rubber composition for tires which contains, with respect to 100 parts by mass of a diene-based rubber component including 70 parts by mass or more of a styrene-butadiene rubber having a styrene content percentage of 20% to 60% by mass among rubber components, each filler from a filler group consisting of 50 to 300 parts by mass of silica, 0 to 150 parts by mass of an inorganic agent represented by general formula: $mM1 \cdot xSiOy \cdot zH_2O$, and 0 to 150 parts by mass of carbon black, such that the total amount of the silica and the inorganic agent is 200 to 350 parts by mass, while the total amount of the silica, the inorganic agent, and the carbon black is 200 to 350 parts by mass, the rubber composition for tires containing a softening agent in an amount of 70% by mass or more with respect to the total amount of fillers and also containing 5 to 60 parts by mass of at least one or more resins having a softening point of 145°C or lower (see, for example, PTL 2). EP2787032 discloses a tire exhibiting improved wet-grip performance while ensuring good fuel economy, which includes a composition comprising a styrene - butadiene rubber modified with 3-diethylaminopropyltriethoxysilane having a styrene content of 14 wt%, and a silica having a nitrogen adsorption specific surface area of 80 $m^2$/g or a silica having a nitrogen adsorption specific surface area of 110$m^2$/g.

Citation List

Patent Literature

- PTL 1: WO 2015/079703
- PTL 2: JP 2008-184505 A

Summary of Invention

Technical Problem

However, with regard to the balance between an increase in the grip performance on wet road surfaces (wet grip performance) and a decrease in the rolling resistance, there has been a demand for further enhancement as compared with tires obtained by using the rubber compositions disclosed in PTL 1 and PTL 2.

An object of the present invention is to provide a tire having excellent grippability on wet road surfaces and low rolling resistance, and a rubber composition capable of producing the tire, and the present invention is intended to achieve this object.

Solution to Problem

<1> A tire obtained by using a rubber composition,

the rubber composition including:

a rubber component containing a rubber having an isoprene structure and an aminoalkoxysilane-modified styrene-butadiene rubber having an amount of bonded styrene of 15% by mass or less;
a filler containing a silica having a nitrogen adsorption specific surface area (BET method) of 80 $m^2$/g or more and less than 130 $m^2$/g, the amount of the filler being 40 to 125 parts by mass per 100 parts by mass of the rubber component; and
a hydrogenated resin having a softening point of higher than 110°C and having a weight average molecular weight as converted to polystyrene of 200 to 1200, the amount of the hydrogenated resin being 5 to 50 parts by mass per 100 parts by mass of the rubber component.

<2> The tire according to <1>, in which the rubber component further includes an aminoalkoxysilane-modified styrene-butadiene rubber having an amount of bonded styrene of 30% by mass or more.
<3> The tire according to <1> or <2>, in which the content of the aminoalkoxysilane-modified styrene-butadiene rubber in the rubber component is 10% to 90% by mass.
<4> The tire according to any one of <1> to <3>, in which the content of the rubber having an isoprene structure in the rubber component is 10% to 90% by mass.
<5> The tire according to any one of <1> to <4>, in which the filler further contains carbon black, and the content of the silica in the filler is 70% by mass or more.
<6> The tire according to any one of <1> to <5>, in which the hydrogenated resin is at least one selected from the group consisting of a hydrogenated $C_5$-based resin, a hydrogenated $C_5$-$C_9$-based resin, and a hydrogenated dicyclopentadiene-based resin.

Advantageous Effects of Invention

According to the present invention, a tire having excellent grippability on wet road surfaces and low rolling resistance, and a rubber composition capable of producing the tire can be provided.

Description of Embodiments

[Tire]

The tire (pneumatic tire) of the present invention is formed by using a rubber composition that includes a rubber component containing a rubber having an isoprene structure and an aminoalkoxysilane-modified styrene-butadiene rubber having an amount of bonded styrene of 15% by mass or less; a filler containing a silica having a nitrogen adsorption specific surface area (BET method) of 80 $m^2$/g or more and less than 130 $m^2$/g, the amount of the filler being 40 to 125 parts by mass per 100 parts by mass of the rubber component; and a hydrogenated resin having a softening point of higher than 110°C and having a weight average molecular weight as converted to polystyrene of 200 to 1200, the amount of the hydrogenated resin being 5 to 50 parts by mass with respect to 100 parts by mass of the rubber component.
As described above, since the tire obtained by using the rubber composition has excellent grippability on wet road surfaces and low rolling resistance, the rubber composition is suitable for a tread part.
The tire may be obtained by performing molding by using an unvulcanized rubber composition according to the type of the tire to be applied, the member, and the like and then vulcanizing the molded product, or may be obtained by firstly obtaining a semi-vulcanized rubber from an unvulcanized rubber composition by performing a preliminary vulcanization step or the like, subsequently performing molding using this semi-vulcanized rubber, and then further performing main vulcanization. Incidentally, regarding the gas for filling the tire, an inert gas such as nitrogen, argon, or helium can be used in addition to ordinary air or air with an adjusted oxygen partial pressure.

[Rubber composition]

The rubber composition of the present invention includes: a rubber component containing a rubber having an isoprene structure and an aminoalkoxysilane-modified styrene-butadiene rubber having an amount of bonded styrene of 15% by mass or less; a filler containing a silica having a nitrogen adsorption specific surface area (BET method) of 80 $m^2$/g or more and less than 130 $m^2$/g, the amount of the filler being 40 to 125 parts by mass per 100 parts by mass of the rubber component; and a hydrogenated resin having a softening point of higher than 110°C and a weight average molecular weight as converted to polystyrene of 200 to 1200, the amount of the hydrogenated resin being 5 to 50 parts by mass per 100 parts by mass as a total of the rubber component.
According to the present invention, the "aminoalkoxysilane-modified styrene-butadiene rubber having an

amount of bonded styrene of 15% by mass or less" may be referred to as "modified SBR with low amount of bonded styrene". Furthermore, the "hydrogenated resin having a softening point of higher than 110°C and having a weight average molecular weight as converted to polystyrene of 200 to 1200" may be referred to as "hydrogenated resin of the present invention".

Furthermore, the nitrogen adsorption specific surface area (BET method) is the nitrogen adsorption method specific surface area ($N_2SA$) measured according to the BET method as defined in ASTM D4567-03 (2007) and may be referred to as "BET specific surface area".

In conventional technologies, the grip performance on wet road surfaces has been enhanced by inorganic fillers such as silica. However, such fillers have a problem that the energy loss is also increased. Furthermore, an investigation has been conducted to provide a rubber composition for a tire tread that achieves an excellent balance between wet grip performance and low rolling resistance performance without impairing the abrasion resistance of a tire, by blending rubbers having different glass transition temperatures (Tg); however, there were also shortcomings in regard to low hysteresis loss performance, abrasion resistance performance, and the like.

Furthermore, in recent years, various studies have been conducted on mixing of a larger amount of a thermoplastic resin in the rubber composition, mixing of a high silica ratio in the filler, mixing by using a modified polymer that highly disperses silica, and the like; however, there has been a limit to the resolution of trade-off. Particularly, in a technology of mixing a large amount of a softening agent including a thermoplastic resin, there was also a problem that the elastic modulus of rubber is decreased.

In contrast, since the rubber composition according to the present invention has the above-described configuration, a tire obtained from the rubber composition has excellent grip performance on wet road surfaces and low rolling resistance.

The reason for this is not clearly understood; however, the phenomenon is speculated to be due to the following reasons.

The hydrogenated resin of the present invention has a weight average molecular weight as converted to polystyrene of 1200 or less, and since the hydrogenated resin has a low molecular weight, it is highly compatible with the rubber component. Furthermore, since the hydrogenated resin of the present invention has a high softening point, it is considered that the hydrogenated resin reinforces the rubber component and increases the elastic modulus of vulcanized rubber, and it is speculated that the rolling resistance of a tire is decreased. At the same time, the hydrogenated resin of the present invention can impart the flexibility required for road surface grippability to a tire due to its high compatibility, and it is considered that the grippability on a slippery wet road surface, that is, wet grip performance, can be enhanced.

Since the styrene-butadiene rubber included in the rubber composition according to the present invention is modified, the styrene-butadiene rubber has a high interaction with silica, which is a reinforcing filler. For this reason, it is considered that the strength of the tire is increased by the action of the modified styrene-butadiene rubber and silica, and the rolling resistance is further decreased. In addition, since the rubber composition according to the present invention includes a silica having a nitrogen adsorption specific surface area (BET method) of 80 $m^2/g$ or more and less than 130 $m^2/g$, and the particle size of the silica is large, it is considered that the tire does not become too hard, and the road surface grippability can be further enhanced. Furthermore, since the rubber composition according to the present invention includes a rubber having an isoprene structure, it is considered that the rubber composition enhances the mechanical strength of the tire and also has excellent abrasion resistance.

From the above, it is considered that a tire obtainable from the rubber composition according to the present invention has excellent grip performance on wet road surfaces and has low rolling resistance.

In the following description, the rubber composition according to the present invention will be described in detail.

[Rubber component]

The rubber component contains: a rubber having an isoprene structure; and an aminoalkoxysilane-modified styrene-butadiene rubber (modified SBR) having an amount of bonded styrene of 15% by mass or less.

<Rubber having isoprene structure>

As the rubber component contains a rubber having an isoprene skeleton, the fracture strength of vulcanized rubber can be increased. As a result, the rolling resistance of the tire can be lowered, and the abrasion resistance of the vulcanized rubber is excellent.

Examples of the rubber having an isoprene structure include natural rubber (NR) and polyisoprene rubber (IR).

The content of the rubber having an isoprene structure in the rubber component further decreases the rolling resistance of the tire, and from the viewpoint of enhancing the abrasion resistance of vulcanized rubber, the content is preferably 10% to 90% by mass. The content of the rubber having an isoprene structure is more preferably 20% by mass or more, even more preferably 30% by mass or more, and still more preferably 40% by mass or more. Furthermore, the

content of the rubber having an isoprene structure is more preferably 85% by mass or less, even more preferably 80% by mass or less, still more preferably 70% by mass or less, and even more preferably 60% by mass or less.

<Modified styrene-butadiene rubber>

As the rubber component includes an aminoalkoxysilane-modified styrene-butadiene rubber (modified SBR) having an amount of bonded styrene of 15% by mass or less, the rubber component interacts with silica and can enhance the effect brought by addition of silica, which will be described below. In addition, since the rubber component contains an aminoalkoxysilane-modified styrene-butadiene rubber having an amount of bonded styrene of 15% by mass or less, excellent rolling resistance is obtained.

The amount of bonded styrene for a styrene-butadiene rubber means the proportion of a styrene unit included in the styrene-butadiene rubber.

The content of the aminoalkoxysilane-modified SBR in the rubber component is preferably 10% to 90% by mass, from the viewpoint of enhancing the grippability on wet road surfaces. The content of the aminoalkoxysilane-modified SBR is more preferably 20% by mass or more, even more preferably 30% by mass or more, and still more preferably 40% by mass or more. Furthermore, the content of the aminoalkoxysilane-modified SBR is more preferably 85% by mass or less, even more preferably 80% by mass or less, still more preferably 70% by mass or less, and even more preferably 60% by mass or less.

The amount of bonded styrene of the modified SBR with low amount of bonded styrene is preferably 15% by mass or less, more preferably 13% by mass or less, and even more preferably 11% by mass or less. Furthermore, from the viewpoint of enhancing the fracture characteristics, the amount of bonded styrene of the modified SBR with low amount of bonded styrene is preferably 5% by mass or more, more preferably 7% by mass or more, and even more preferably 9% by mass or more.

From the viewpoint of enhancing the fracture characteristics, the mass proportion of the rubber having an isoprene structure with respect to the modified SBR with low amount of bonded styrene included in the rubber component, [(rubber having an isoprene structured modified SBR with low amount of bonded styrene)], is preferably 1 or greater, more preferably 1.1 or greater, even more preferably 1.2 or greater, and particularly preferably 1.3 or greater. From the viewpoint of decreasing the rolling resistance, the proportion (mass ratio) of the rubber having an isoprene structure with respect to the modified SBR with low amount of bonded styrene included in the rubber component is preferably less than 2, more preferably 1.8 or less, even more preferably 1.6 or less, and particularly preferably 1.5 or less.

It is preferable that the rubber component of the present invention further includes a modified styrene-butadiene rubber having an amount of bonded styrene of 30% by mass or more (hereinafter, referred to as "modified SBR with high amount of bonded styrene"). As the rubber component further contains a modified SBR with high amount of bonded styrene in addition to the modified SBR with low amount of bonded styrene, the wet grip performance can be enhanced.

From the viewpoint of enhancing the wet grip performance, the amount of bonded styrene of the modified SBR with high amount of bonded styrene is more preferably 35% by mass or more, even more preferably 38% by mass or more, still more preferably 39% by mass or more, and even more preferably 40% by mass or more. Furthermore, from the viewpoint of decreasing the rolling resistance, the amount of bonded styrene of the modified SBR with high amount of bonded styrene is more preferably 44% by mass or less, and even more preferably 43% by mass or less.

From the viewpoint of decreasing the rolling resistance, the mass proportion of the modified SBR with low amount of bonded styrene with respect to the modified SBR with high amount of bonded styrene included in the rubber component, [(modified SBR with low amount of bonded styrene)/(modified SBR with high amount of bonded styrene)], is preferably 1.3 or greater, more preferably 1.5 or greater, even more preferably 1.8 or greater, and particularly preferably 2.1 or greater. From the viewpoint of enhancing the wet grip performance, the mass proportion of the modified SBR with low amount of bonded styrene with respect to the modified SBR with high amount of bonded styrene included in the rubber component is preferably 3.8 or less, more preferably 3.6 or less, even more preferably 3.2 or less, still more preferably 2.8 or less, and particularly preferably 2.6 or less.

The rubber component may include another rubber component in addition to the rubber having an isoprene structure, the modified SBR with low amount of bonded styrene, and the modified SBR with high amount of bonded styrene.

Examples of the another rubber component include an aminoalkoxysilane-modified styrene-butadiene rubber having an amount of bonded styrene of more than 15% and less than 30%, a modified styrene-butadiene rubber other than aminoalkoxysilane modification, an unmodified styrene-butadiene rubber, a butadiene rubber (BR), a chloroprene rubber, a butyl rubber (IIR), a halogenated butyl rubber, an ethylene-propylene rubber (EPR, EPDM), a fluorine rubber, a silicone rubber, and a urethane rubber.

The amount of bonded styrene of the modified styrene-butadiene rubber can be adjusted by means of the quantity of monomers used for the polymerization of the modified styrene-butadiene rubber, the degree of polymerization, and the like. Furthermore, the amount of bonded styrene of the modified styrene-butadiene rubber can be determined by an ultraviolet method, an infrared method (Morero method), or the like.

Incidentally, the amount of bonded styrene and the amount of vinyl bonds for a polymer such as a modified SBR may be referred to as the microstructure of the polymer.

Aminoalkoxysilane modification is the generic name for modifying groups each having a functional group including at least one nitrogen atom and at least one alkoxysilane group. In the following description, a functional group including at least one nitrogen atom may be referred to as a nitrogen atom-containing group.

It is preferable that the functional group including at least one nitrogen atom (nitrogen atom-containing group) is selected from the following.

That is, it is preferable that the nitrogen atom-containing group is a monovalent group having a functional group selected from the group consisting of a primary amino group, a primary amino group protected with a hydrolysable protective group, an onium salt residue of a primary amine, an isocyanate group, a thioisocyanate group, an imine group, an imine residue, an amide group, a secondary amino group protected with a hydrolysable protective group, a cyclic secondary amino group, an onium salt residue of a cyclic secondary amine, an acyclic secondary amino group, an onium salt residue of an acyclic secondary amine, an isocyanuric acid triester residue, a cyclic tertiary amino group, an acyclic tertiary amino group, a nitrile group, a pyridine residue, an onium salt residue of a cyclic tertiary amine, and an onium salt residue of an acyclic tertiary amine.

The nitrogen atom-containing group may further include at least one selected from the group consisting of a hydrocarbon group and a heteroatom. Here, the hydrocarbon group may be a monovalent hydrocarbon group having 1 to 30 carbon atoms and including a linear, branched, alicyclic, or aromatic ring. Furthermore, the heteroatom may be at least one heteroatom selected from the group consisting of an oxygen atom, a sulfur atom, and a phosphorus atom.

The modification site of the aminoalkoxysilane-modified SBR having an amount of bonded styrene of 15% or less may be a molecular terminal as described above but may also be the main chain.

An SBR having a modified molecular terminal can be produced by reacting various modifying agents with a terminal of an SBR having an active terminal according to the methods described in, for example, WO 2003/046020 and JP 2007-217562 A.

According to one suitable embodiment, the aminoalkoxysilane-modified SBR having an amount of bonded styrene of 15% or less, in which a molecular terminal has been modified, can be produced by reacting a terminal of an SBR having an active terminal and having an amount of cis-1,4-bonds of 75% or more with an aminoalkoxysilane compound according to the methods described in WO 2003/046020 and JP 2007-217562 A, and then reacting the terminal with a carboxylic acid partial ester of a polyhydric alcohol to stabilize the terminal.

The carboxylic acid partial ester of the polyhydric alcohol is an ester between a polyhydric alcohol and a carboxylic acid and means a partial ester having one or more hydroxy groups. Specifically, an ester between a saccharide having 4 or more carbon atoms or a modified saccharide and a fatty acid is preferably used. This ester may be more preferably: (1) a fatty acid partial ester of a polyhydric alcohol, particularly a partial ester (may be any one of a monoester, a diester, and a triester) between a saturated higher fatty acid or unsaturated higher fatty acid having 10 to 20 carbon atoms and a polyhydric alcohol; (2) an ester compound obtained by bonding one to three units of a partial ester of a polyvalent carboxylic acid and a higher alcohol to a polyhydric alcohol; or the like.

Regarding the polyhydric alcohol used as a raw material for the partial ester, preferably a saccharide having 5 or 6 carbon atoms and having at least three hydroxy groups (may be hydrogenated or may be non-hydrogenated), a glycol, a polyhydroxy compound, and the like are used. Furthermore, the raw material fatty acid is preferably a saturated or unsaturated fatty acid having 10 to 20 carbon atoms, and for example, stearic acid, lauric acid, and palmitic acid are used.

Among the fatty acid partial esters of polyhydric alcohols, a sorbitan fatty acid ester is preferred, and specific examples include sorbitan monolauric acid ester, sorbitan monopalmitic acid ester, sorbitan monostearic acid ester, sorbitan tristearic acid ester, sorbitan monooleic acid ester, and sorbitan trioleic acid ester.

The aminoalkoxysilane compound is not particularly limited; however, it is more preferable that the aminoalkoxysilane compound is an aminoalkoxyalkoxysilane compound represented by the following General Formula (i).

$$R^{11}_{a}\text{-Si-}(OR^{12})_{4-a} \qquad (i)$$

In General Formula (i), $R^{11}$ and $R^{12}$ each independently represent a monovalent aliphatic hydrocarbon group having 1 to 20 carbon atoms or a monovalent aromatic hydrocarbon group having 6 to 18 carbon atoms; at least one of $R^{11}$ and $R^{12}$ is substituted with an amino group; a represents an integer of 0 to 2; when a large number of $OR^{12}$'s are present, each $OR^{12}$ may be identical with or different from each other; and an active proton is not included in the molecule.

It is preferable that the modifying group having a functional group including at least one nitrogen atom, at least one alkoxy group, and at least one silane atom is more specifically a modifying group derived from a hydrocarbyloxysilane compound represented by the following General Formula (II).

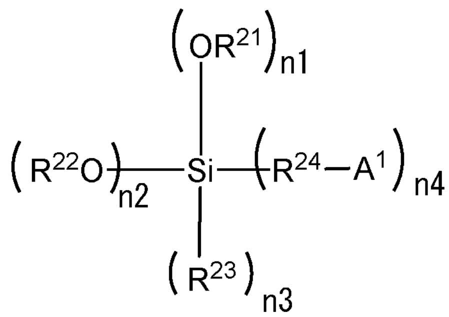

(II)

In the General Formula (II), n1 + n2 + n3 + n4 = 4 (provided that n2 represents an integer of 1 to 4; and n1, n3, and n4 each represent an integer of 0 to 3); $A^1$ represents at least one functional group selected from a saturated cyclic tertiary amine compound residue, an unsaturated cyclic tertiary amine compound residue, a ketimine residue, a nitrile group, a (thio)isocyanate group (represents an isocyanate group or a thioisocyanate group; hereinafter, the same), a (thio)epoxy group, an isocyanuric acid trihydrocarbyl ester group, a carbonic acid dihydrocarbyl ester group, a nitrile group, a pyridine group, a (thio)ketone group, a (thio)aldehyde group, an amide group, a (thio)carboxylic acid ester group, a metal salt of a (thio)carboxylic acid ester, a carboxylic acid anhydride residue, a carboxylic acid halogen compound residue, and a primary or secondary amino group or a mercapto group, both having a hydrolysable group, when n4 is two or greater, $A^1$'s may be identical or different; $A^1$ may be a divalent group that is bonded to Si and forms a cyclic structure; $R^{21}$ represents a monovalent aliphatic or alicyclic hydrocarbon group having 1 to 20 carbon atoms, or a monovalent aromatic hydrocarbon group having 6 to 18 carbon atoms, when n1 is 2 or greater, $R^{21}$'s may be identical or different; $R^{23}$ represents a monovalent aliphatic or alicyclic hydrocarbon group having 1 to 20 carbon atoms, a monovalent aromatic hydrocarbon group having 6 to 18 carbon atoms, or a halogen atom (fluorine, chlorine, bromine, or iodine), when n3 is 2 or greater, $R^{23}$'s may be identical or different; $R^{22}$ represents a monovalent aliphatic or alicyclic hydrocarbon group having 1 to 20 carbon atoms or a monovalent aromatic hydrocarbon group having 6 to 18 carbon atoms, all may contain a nitrogen atom and/or a silicon atom, when n2 is 2 or greater, $R^{22}$'s may be identical with or different from each other, or $R^{22}$'s may be bonded together to form a ring; $R^{24}$ represents a divalent aliphatic or alicyclic hydrocarbon group having 1 to 20 carbon atoms or a divalent aromatic hydrocarbon group having 6 to 18 carbon atoms, and when n4 is 2 or greater, $R^{24}$'s may be identical or different.

The hydrolysable group in the primary or secondary amino group having a hydrolysable group or the mercapto group having a hydrolysable group is preferably a trimethylsilyl group or a tert-butyldimethylsilyl group, and particularly preferably a trimethylsilyl group.

Incidentally, according to the present invention, the "monovalent aliphatic or alicyclic hydrocarbon group having 1 to 20 carbon atoms" refers to "a monovalent aliphatic hydrocarbon group having 1 to 20 carbon atoms or a monovalent alicyclic hydrocarbon group having 3 to 20 carbon atoms". The same also applies to the case of a divalent hydrocarbon group.

As a specific example of the hydrocarbyloxysilane compound represented by General Formula (II), [N,N-bis(trimethylsilyl)-(3-amino-1-propyl)](methyl)(diethoxy)silane may be suitably mentioned.

In addition, it is more preferable that the hydrocarbyloxysilane compound represented by General Formula (II) is a hydrocarbyloxysilane compound represented by the following General Formula (III).

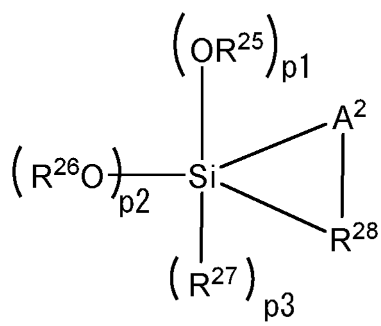

(III)

In the General Formula (III), p1 + p2 + p3 = 2 (provided that p2 represents an integer of 1 to 2; and p1 and p3 each represent an integer of 0 to 1); and $A^2$ represents NRa (Ra represents a monovalent hydrocarbon group, a hydrolysable group, or a nitrogen-containing organic group. The hydrolysable group is preferably a trimethylsilyl group or a tert-butyldimethylsilyl group, and particularly preferably a trimethylsilyl group), or sulfur; $R^{25}$ represents a monovalent

aliphatic or alicyclic hydrocarbon group having 1 to 20 carbon atoms or a monovalent aromatic hydrocarbon group having 6 to 18 carbon atoms; $R^{27}$ represents a monovalent aliphatic or alicyclic hydrocarbon group having 1 to 20 carbon atoms, a monovalent aromatic hydrocarbon group having 6 to 18 carbon atoms, or a halogen atom (fluorine, chlorine, bromine, or iodine); $R^{26}$ represents a monovalent aliphatic or alicyclic hydrocarbon group having 1 to 20 carbon atoms, a monovalent aromatic hydrocarbon group having 6 to 18 carbon atoms, or a nitrogen-containing organic group, all may contain a nitrogen atom and/or a silicon atom, and when p2 is 2, $R^{26}$'s may be identical with or different from each other, or $R^{26}$'s may be joined together to form a ring; and $R^{28}$ represents a divalent aliphatic or alicyclic hydrocarbon group having 1 to 20 carbon atoms or a divalent aromatic hydrocarbon group having 6 to 18 carbon atoms.

In addition, it is more preferable that the hydrocarbyloxysilane compound represented by General Formula (II) is a hydrocarbyloxysilane compound represented by the following General Formula (IV) or (V).

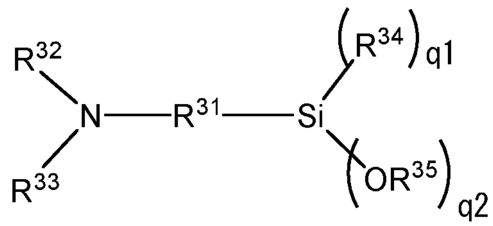

(IV)

In the General Formula (IV), q1 + q2 = 3 (provided that q1 represents an integer of 0 to 2; and q2 represents an integer of 1 to 3); $R^{31}$ represents a divalent aliphatic or alicyclic hydrocarbon group having 1 to 20 carbon atoms or a divalent aromatic hydrocarbon group having 6 to 18 carbon atoms; $R^{32}$ and $R^{33}$ each independently represent a hydrolysable group, a monovalent aliphatic or alicyclic hydrocarbon group having 1 to 20 carbon atoms, or a monovalent aromatic hydrocarbon group having 6 to 18 carbon atoms; $R^{34}$ represents a monovalent aliphatic or alicyclic hydrocarbon group having 1 to 20 carbon atoms or a monovalent aromatic hydrocarbon group having 6 to 18 carbon atoms, and when q1 is 2, $R^{34}$'s may be identical or different; and $R^{35}$ represents a monovalent aliphatic or alicyclic hydrocarbon group having 1 to 20 carbon atoms or a monovalent aromatic hydrocarbon group having 6 to 18 carbon atoms, and when q2 is 2 or greater, $R^{35}$'s may be identical or different.

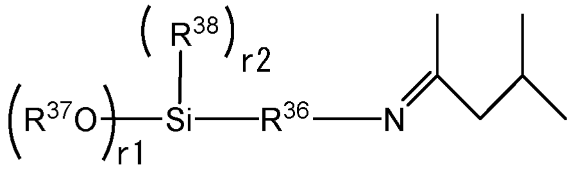

(V)

In the General Formula (V), r1 + r2 = 3 (provided that r1 represents an integer of 1 to 3; and r2 represents an integer of 0 to 2); $R^{36}$ represents a divalent aliphatic or alicyclic hydrocarbon group having 1 to 20 carbon atoms or a divalent aromatic hydrocarbon group having 6 to 18 carbon atoms; $R^{37}$ represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having 1 to 20 carbon atoms or a monovalent aromatic hydrocarbon group having 6 to 18 carbon atoms, and when r1 is 2 or greater, $R^{37}$'s may be identical or different; and $R^{38}$ represents a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, while when r2 is 2, $R^{38}$'s may be identical or different.

Furthermore, it is preferable that the modifying agent is a hydrocarbyloxysilane compound having two or more nitrogen atoms, which is represented by the following General Formula (VI) or (VII).

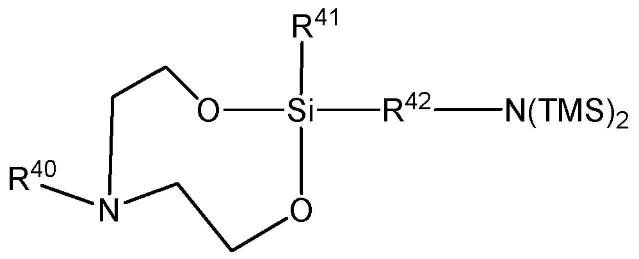

(VI)

In the General Formula (VI), TMS represents a trimethylsilyl group; $R^{40}$ represents a monovalent aliphatic or alicyclic hydrocarbon group having 1 to 20 carbon atoms or a monovalent aromatic hydrocarbon group having 6 to 18 carbon atoms; $R^{41}$ represents a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms; and $R^{42}$ represents a divalent aliphatic or alicyclic hydrocarbon group having 1 to 20 carbon atoms or a divalent aromatic hydrocarbon group having 6 to 18 carbon atoms.

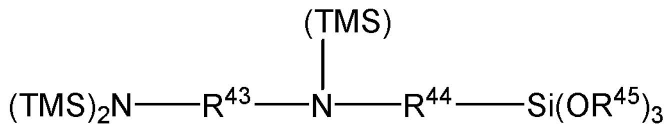

(VII)

In the General Formula (VII), TMS represents a trimethylsilyl group; $R^{43}$ and $R^{44}$ each independently represent a divalent aliphatic or alicyclic hydrocarbon group having 1 to 20 carbon atoms or a divalent aromatic hydrocarbon group having 6 to 18 carbon atoms; $R^{45}$ represents a monovalent aliphatic or alicyclic hydrocarbon group having 1 to 20 carbon atoms or a monovalent aromatic hydrocarbon group having 6 to 18 carbon atoms; and a plurality of $R^{45}$'s may be identical or different.

Furthermore, it is more preferable that the hydrocarbyloxysilane compound represented by General Formula (II) is a hydrocarbyloxysilane compound represented by the following General Formula (VIII).

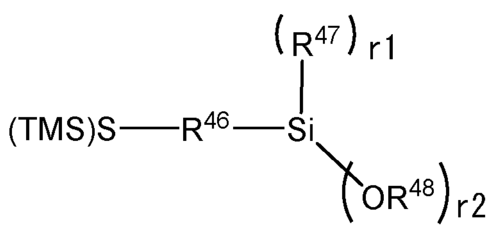

(VIII)

In the General Formula (VIII), r1 + r2 = 3 (provided that r1 represents an integer of 0 to 2; and r2 represents an integer of 1 to 3); TMS represents a trimethylsilyl group; $R^{46}$ represents a divalent aliphatic or alicyclic hydrocarbon group having 1 to 20 carbon atoms or a divalent aromatic hydrocarbon group having 6 to 18 carbon atoms; and $R^{47}$ and $R^{48}$ each independently represent a monovalent aliphatic or alicyclic hydrocarbon group having 1 to 20 carbon atoms or a monovalent aromatic hydrocarbon group having 6 to 18 carbon atoms. A plurality of $R^{47}$'s or $R^{48}$'s may be identical or different.

Furthermore, it is preferable that the above-described modifying agent is a hydrocarbyloxysilane compound represented by the following General Formula (IX).

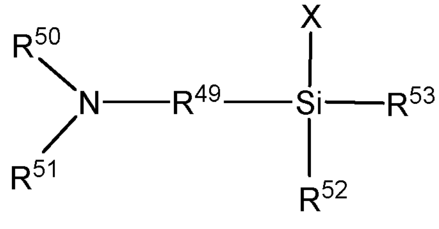

(IX)

In the General Formula (IX), X represents a halogen atom (fluorine, chlorine, bromine, or iodine); $R^{49}$ represents

a divalent aliphatic or alicyclic hydrocarbon group having 1 to 20 carbon atoms or a divalent aromatic hydrocarbon group having 6 to 18 carbon atoms; $R^{50}$ and $R^{51}$ each independently represent a hydrolysable group, a monovalent aliphatic or alicyclic hydrocarbon group having 1 to 20 carbon atoms or a monovalent aromatic hydrocarbon group having 6 to 18 carbon atoms, or $R^{50}$ and $R^{51}$ may be bonded to form a divalent organic group; and $R^{52}$ and $R^{53}$ each independently represent a halogen atom (fluorine, chlorine, bromine, or iodine), a hydrocarbyloxy group, a monovalent aliphatic or alicyclic hydrocarbon group having 1 to 20 carbon atoms, or a monovalent aromatic hydrocarbon group having 6 to 18 carbon atoms. $R^{50}$ and $R^{51}$ are each preferably a hydrolysable group, and the hydrolysable group is preferably a trimethylsilyl group or a tert-butyldimethylsilyl group, and particularly preferably a trimethylsilyl group.

Furthermore, it is preferable that the modifying agent is a compound having a structure represented by any one of the following General Formula (X) to (XIII).

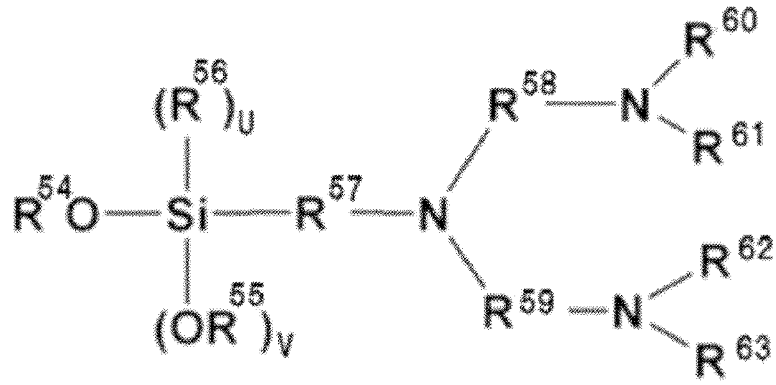

••• (X)

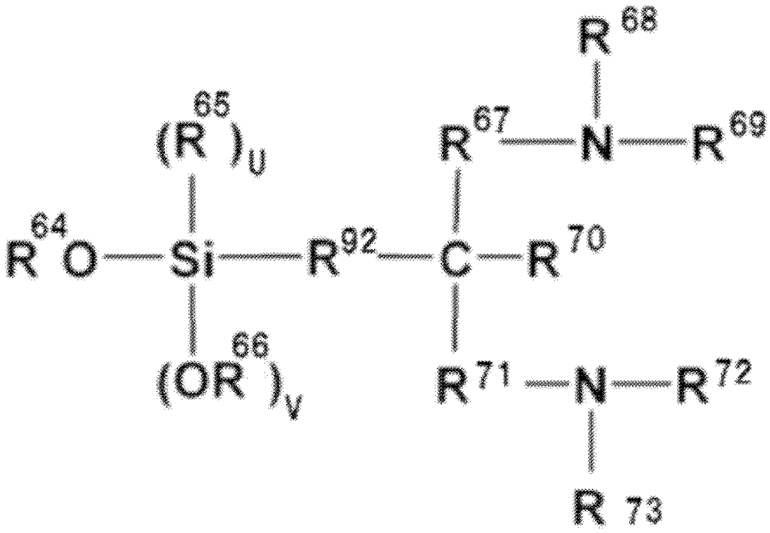

••• (XI)

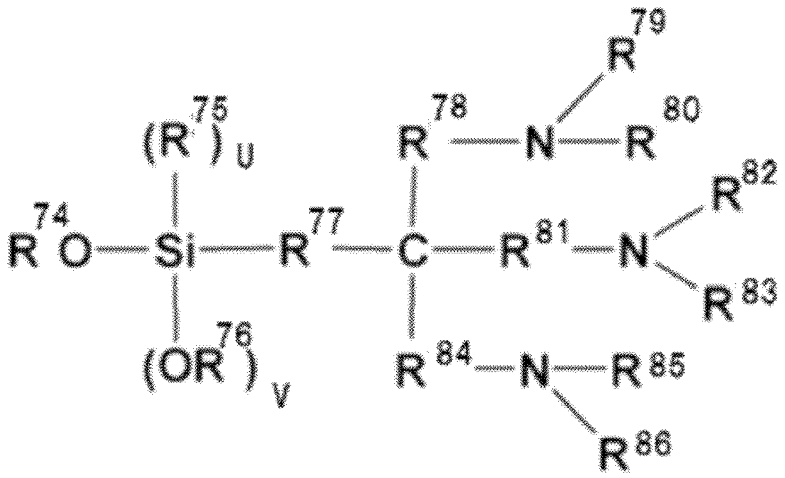

··· (XII)

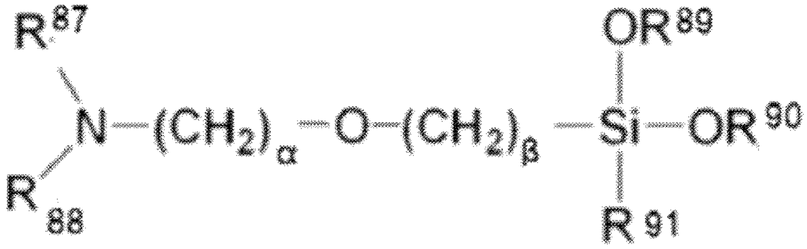

··· (XIII)

Here, the symbols U and V included in Formulae (X) to (XII) each represent an integer of 0 to 2, which satisfy the equation: U + V = 2. Furthermore, $R^{54}$ to $R^{91}$ in Formula (X) to (XIII) may be identical or different, and each of them represents a monovalent or divalent aliphatic or alicyclic hydrocarbon having 1 to 20 carbon atoms or a monovalent or divalent aromatic hydrocarbon group having 6 to 18 carbon atoms. Furthermore, $\alpha$ and $\beta$ in Formula (XIII) each represent an integer of 0 to 5.

Furthermore, among the compounds that satisfy Formulae (X) to (XII), particularly N1,N1,N7-tetramethyl-4-((trimethoxysilyl)methyl)-1,7-heptane, 2-((hexyl-dimethoxysilyl)methyl)-N1,N1,N3,N3-2-pentamethylpropane-1,3-diamine, N 1-(3-(dimethylamino)propyl)-N3,N3-dimethyl-N 1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are preferred, and among the compounds that satisfy Formula (XIII), particularly N,N-dimethyl-2-(3-(dimethoxymethylsilyl)propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propan-1-amine are preferred.

It is preferable that the hydrocarbyloxysilane compounds represented by the above-described General Formulae (II) to (XIII) are used as modifying agents in a case where the modified polymer that may be contained in the polymer phase having the lowest peak temperature in the tan $\delta$ temperature dispersion curve is produced by anionic polymerization.

Furthermore, it is preferable that the hydrocarbyloxysilane compounds represented by General Formulae (II) to (XIII) are alkoxysilane compounds.

With regard to the rubber composition of the present invention, it is preferable that a modified conjugated diene-based polymer (A1) is formed by reacting a conjugated diene-based polymer with a coupling agent represented by the following General Formula (1). In this case, the low hysteresis loss and abrasion resistance of the rubber composition can be further enhanced.

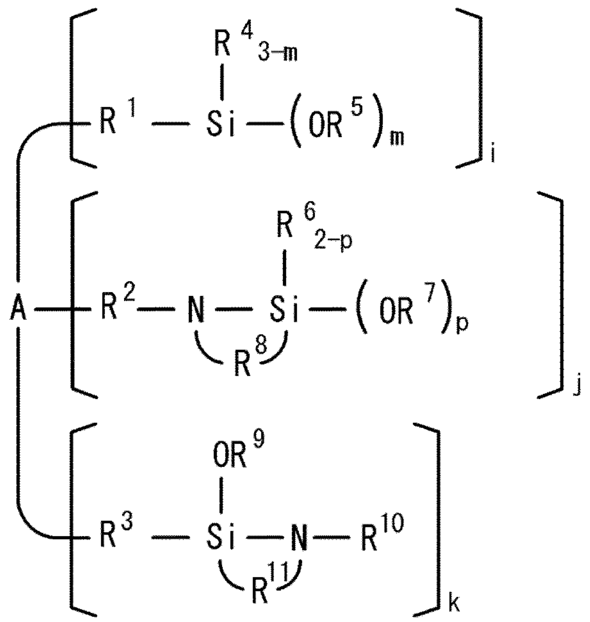

· · · (1)

In the formula, $R^1$, $R^2$, and $R^3$ each independently represent a single bond or an alkylene group having 1 to 20 carbon atoms; $R^4$, $R^5$, $R^6$, $R^7$, and $R^9$ each independently represent an alkyl group having 1 to 20 carbon atoms; $R^8$ and $R^{11}$ each independently represent an alkylene group having 1 to 20 carbon atoms; $R^{10}$ represents an alkyl group or a trialkylsilyl group, each having 1 to 20 carbon atoms; m represents an integer of 1 to 3, and p represents 1 or 2; regarding $R^1$ to $R^{11}$, m, and p, when a plurality of each of these groups exist, they are independent of each other; i, j, and k each independently represent an integer of 0 to 6, provided that (i + j + k) represents an integer of 3 to 10; and A represents a hydrocarbon group or an organic group that has at least one atom selected from the group consisting of an oxygen atom, a nitrogen atom, a silicon atom, a sulfur atom, and a phosphorus atom and does not have active hydrogen, both the hydrocarbon group and the organic group having 1 to 20 carbon atoms.

Generally, a branched polymer tends to have a smaller molecule size when compared with a linear polymer having the same absolute molecular weight, and the shrinkage factor (g') is an index of the ratio of the size occupied by the molecule with respect to a linear polymer assumed to have the same absolute molecular weight. That is, when the degree of branching of a polymer increases, the shrinkage factor (g') tends to decrease. In the present embodiment, the intrinsic viscosity is used as the index for the molecule size, and for the linear polymer, a linear polymer that conforms to the relational formula of intrinsic viscosity $[\eta] = -3.883M^{0.771}$ is used. The shrinkage factor (g') at each absolute molecular weight of the modified conjugated diene-based polymer is calculated, and the average value of the shrinkage factor (g') when the absolute molecular weight is $100\times10^4$ to $200\times10^4$ is designated as the shrinkage factor (g') of the modified conjugated diene-based polymer.

Here, the "branch" is formed as one polymer is directly or indirectly bonded to another polymer. Furthermore, the "degree of branching" is the number of polymers directly or indirectly bonded to each other with respect to one branch. For example, when the five conjugated diene-based polymer chains that will be described below are indirectly bonded to each other by means of the coupling residue that will be described below, the degree of branching is 5. Incidentally, the coupling residue is a constituent unit of a modified conjugated diene-based polymer, the constituent unit being bonded to the conjugated diene-based polymer chain, and the coupling residue is, for example, a structural unit derived from a coupling agent, which is produced by reacting the conjugated diene-based polymer that will be described below with a coupling agent. Furthermore, the conjugated diene-based polymer chain is a constituent unit of the modified conjugated diene-based polymer and is, for example, a structural unit derived from a conjugated diene-based polymer, which is produced by reacting the conjugated diene-based polymer that will be described below with a coupling agent.

The shrinkage factor (g') is less than 0.64, preferably 0.63 or less, more preferably 0.60 or less, even more preferably 0.59 or less, and still more preferably 0.57 or less. Furthermore, the lower limit of the shrinkage factor (g') is not particularly limited and may be less than or equal to the detection limit value; however, the lower limit is preferably 0.30 or more, more preferably 0.33 or more, even more preferably 0.35 or more, and still more preferably 0.45 or more. By using a modified conjugated diene-based polymer (A1) having the shrinkage factor (g') in this range, the processability of the rubber composition is enhanced.

Since the shrinkage factor (g') tends to be dependent on the degree of branching, for example, the shrinkage factor (g') can be controlled by using the degree of branching as an index. Specifically, when a modified conjugated

diene-based polymer having a degree of branching of 6 is employed, the shrinkage factor (g') thereof tends to be 0.59 or greater and 0.63 or less, and when a modified conjugated diene-based polymer having a degree of branching of 8 is employed, the shrinkage factor (g') thereof tends to be 0.45 or more and 0.59 or less. The shrinkage factor (g') is measured by the method described in the Examples that will be described below.

It is preferable that the modified conjugated diene-based polymer (A1) has a branch, and the degree of branching is 5 or more. Furthermore, it is more preferable that the modified conjugated diene-based polymer (A1) has one or more coupling residues and a conjugated diene-based polymer chain that is bonded to the coupling residues, and the branch includes a branch in which 5 or more units of this conjugated diene-based polymer chain are bonded to one unit of this coupling residue. By setting the degree of branching to be 5 or more, and by specifying the structure of the modified conjugated diene-based polymer such that the branch includes a branch in which 5 or more units of the conjugated diene-based polymer chain are bonded to one unit of the coupling residue, the shrinkage factor (g') can be more reliably adjusted to be less than 0.64. Incidentally, the number of the conjugated diene-based polymer chains bonded to one coupling residue can be checked from the value of the shrinkage factor (g').

Furthermore, it is more preferable that the modified conjugated diene-based polymer (A1) has a branch, and the degree of branching is 6 or more. Furthermore, it is even more preferable that the modified conjugated diene-based polymer (A1) has one or more coupling residues and a conjugated diene-based polymer chain that is bonded to the coupling residue, and that the branch includes a branch in which 6 or more units of this conjugated diene-based polymer chain are bonded to one unit of this coupling residue. By setting the degree of branching to be 6 or more, and by specifying the structure of the modified conjugated diene-based polymer such that the branch includes a branch in which 6 or more units of the conjugated diene-based polymer chain are bonded to one unit of the coupling residue, the shrinkage factor (g') can be adjusted to be 0.63 or less.

In addition, it is even more preferable that the modified conjugated diene-based polymer (A1) has a branch, and the degree of branching is 7 or more, and it is still more preferable that the degree of branching is 8 or more. The upper limit of the degree of branching is not particularly limited; however, it is preferable that the upper limit is 18 or less. Furthermore, it is still more preferable that the modified conjugated diene-based polymer (A1) has one or more coupling residues and a conjugated diene-based polymer chain that is bonded to the coupling residue, and the branch includes a branch in which 7 or more units of the conjugated diene-based polymer chain are bonded to one unit of the coupling residue, and it is particularly preferable that the branch includes a branch in which 8 or more units of the conjugated diene-based polymer chain are bonded to one unit of the coupling residue. By setting the degree of branching to be 8 or more, and by specifying the structure of the modified conjugated diene-based polymer such that the branch includes a branch in which 8 or more units of the conjugated diene-based polymer chain are bonded to one unit of the coupling residue, the shrinkage factor (g') can be adjusted to be 0.59 or less.

It is preferable that the modified conjugated diene-based polymer (A1) has a nitrogen atom and a silicon atom. In this case, the processability of the rubber composition is improved, and the low hysteresis loss and abrasion resistance of the rubber composition can be further enhanced. Incidentally, whether the modified conjugated diene-based polymer (A1) has a nitrogen atom can be checked by the presence or absence of adsorption to a specific column by the method described in the Examples that will be described below. Furthermore, whether the modified conjugated diene-based polymer (A1) has a silicon atom can be checked by a metal analysis by the method described in the Examples that will be described below.

It is preferable that at least one terminal of the conjugated diene-based polymer chain is each bonded to the silicon atom carried by the coupling residue. In this case, the terminals of a plurality of conjugated diene-based polymer chains may be bonded to one silicon atom. Furthermore, a terminal of a conjugated diene-based polymer chain and an alkoxy group having 1 to 20 carbon atoms or a hydroxy group may be bonded to one silicon atom, and consequently, the one silicon atom may constitute an alkoxysilyl group having 1 to 20 carbon atoms or a silanol group.

The modified conjugated diene-based copolymer (A1) can be produced into an oil-extended polymer to which an extender oil is added. This modified conjugated diene-based copolymer (A1) may be non-oil-extended or oil-extended; however, from the viewpoint of abrasion resistance, the Mooney viscosity measured at 100°C is preferably 20 or higher and 100 or lower, and more preferably 30 or higher and 80 or lower. Incidentally, the Mooney viscosity is measured by the method described in the Examples that will be described below.

The weight average molecular weight (Mw) of the modified conjugated diene-based polymer (A1) is $20\times10^4$ or more and $300\times10^4$ or less, preferably $50\times10^4$ or more, more preferably $64\times10^4$ or more, and even more preferably $80\times10^4$ or more. Furthermore, the weight average molecular weight is preferably $250\times10^4$ or less, more preferably $180\times10^4$ or less, and even more preferably $150\times10^4$ or less. When the weight average molecular weight is less than $20\times10^4$, the low hysteresis loss and abrasion resistance of the rubber composition cannot be sufficiently enhanced. Furthermore, when the weight average molecular weight is more than $300\times10^4$, the processability of the rubber composition is deteriorated. The weight average molecular weights of the modified conjugated diene-based polymer (A1) and the conjugated diene-based polymer that will be described below are measured by the method described in the Examples that will be described below.

The modified conjugated diene-based polymer (A1) includes 0.25% by mass or more and 30% by mass or less of a modified conjugated diene-based polymer having a molecular weight of $200\times10^4$ or more and $500\times10^4$ or less (hereinafter, also referred to as "specific high-molecular weight component") with respect to the total amount (100% by mass) of the modified conjugated diene-based polymer. When the content of the specific high-molecular weight component is less than 0.25% by mass or more than 30% by mass, the low hysteresis loss and abrasion resistance of the rubber composition cannot be sufficiently enhanced.

The modified conjugated diene-based polymer (A1) includes the specific high-molecular weight component at a proportion of preferably 1.0% by mass or more, more preferably 1.4% by mass or more, even more preferably 1.75% by mass or more, still more preferably 2.0% by mass or more, particularly preferably 2.15% by mass or more, and extremely preferably 2.5% by mass or more. Furthermore, the modified conjugated diene-based polymer (A1) includes the specific high-molecular weight component at a proportion of preferably 28% by mass or less, more preferably 25% by mass or less, even more preferably 20% by mass or less, and still more preferably 18% by mass or less.

Incidentally, the "molecular weight" according to the present specification is the molecular weight calculated relative to polystyrene standards, which is obtainable by GPC (gel permeation chromatography). In order to obtain a modified conjugated diene-based polymer (A1) having the content of the specific high-molecular weight component in such a range, it is preferable to control the reaction conditions for the polymerization step and reaction step, which will be described below. For example, in the polymerization step, the amount of use of the organomonolithium compound, which will be described below, as a polymerization initiator may be adjusted. Furthermore, in the polymerization step, a method having a retention time distribution is used for both the continuous type and the batch type polymerization mode, that is, it is desirable to broaden the time distribution of the growth reaction.

With regard to the modified conjugated diene-based polymer (A1), the molecular weight distribution (Mw/Mn) represented by the ratio of the weight average molecular weight (Mw) with respect to the number average molecular weight (Mn) is preferably 1.6 or more and 3.0 or less. When the molecular weight distribution of the modified conjugated diene-based polymer (A1) is in this range, the processability of the rubber composition is improved.

Incidentally, the number average molecular weight, the weight average molecular weight, the molecular weight distribution, and the content of the specific high-molecular weight component for the modified conjugated diene-based polymer (A1) and the conjugated diene-based polymer that will be described below are measured by the methods described in the Examples that will be described below.

The method of producing the modified conjugated diene-based polymer (A1) is not particularly limited; however, it is preferable that the method has a polymerization step of polymerizing at least a conjugated diene compound by using an organomonolithium compound as a polymerization initiator and obtaining a conjugated diene-based polymer; and a reaction step of reacting an active terminal of the conjugated diene-based polymer with a pentafunctional or higher-functional reactive compound (hereinafter, may also be referred to as "coupling agent"). It is preferable that the coupling agent is reacted with a pentafunctional or higher-functional reactive compound having a nitrogen atom and a silicon atom.

It is preferable that the modified conjugated diene-based polymer (A1) is formed by reacting a conjugated diene-based polymer with the coupling agent represented by General Formula (1). By using the modified conjugated diene-based polymer (A1) formed by reacting with the coupling agent, the low hysteresis loss and abrasion resistance of the rubber composition can be further enhanced.

In General Formula (1), $R^1$, $R^2$, and $R^3$ each independently represent a single bond or an alkylene group having 1 to 20 carbon atoms; $R^4$, $R^5$, $R^6$, $R^7$, and $R^9$ each independently represent an alkyl group having 1 to 20 carbon atoms; $R^8$ and $R^{11}$ each independently represent an alkylene group having 1 to 20 carbon atoms; $R^{10}$ represents an alkyl group or a trialkylsilyl group having 1 to 20 carbon atoms; m represents an integer of 1 to 3; p represents 1 or 2; when plural numbers of $R^1$ to $R^{11}$, m, and p are present, they are each independent; i, j, and k each independently represent an integer of 0 to 6, provided that (i + j + k) represents an integer of 3 to 10; and A represents a hydrocarbon group having 1 to 20 carbon atoms or an organic group that has at least one atom selected from the group consisting of an oxygen atom, a nitrogen atom, a silicon atom, a sulfur atom, and a phosphorus atom but does not have active hydrogen.

Here, in General Formula (1), the hydrocarbon group represented by A includes saturated, unsaturated, aliphatic, and aromatic hydrocarbon groups. Examples of the organic group that does not have active hydrogen include organic groups that do not have functional groups having active hydrogen, such as a hydroxy group (-OH), a secondary amino group (>NH), a primary amino group ($-NH_2$), and a sulfhydryl group (-SH).

The polymerization step is preferably polymerization by a growth reaction by means of a living anionic polymerization reaction, thereby a conjugated diene-based polymer having an active terminal can be obtained, and a modified diene-based polymer (A1) having a high modification ratio can be obtained.

The conjugated diene-based polymer is obtained by polymerizing at least a conjugated diene compound and is obtained by copolymerizing both a conjugated diene compound and a vinyl-substituted aromatic compound as necessary.

The conjugated diene compound is preferably a conjugated diene compound having 4 to 12 carbon atoms, and more preferably a conjugated diene compound having 4 to 8 carbon atoms. Examples of such a conjugated diene

compound include 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, from the viewpoint of easy industrial availability, 1,3-butadiene and isoprene are preferred. Regarding these conjugated diene compounds, one kind thereof may be used alone, or two or more kinds thereof may be used in combination.

Furthermore, the vinyl-substituted aromatic compound is preferably a monovinyl aromatic compound. Examples of the monovinyl aromatic compound include styrene, p-methylstyrene, a-methylstyrene, vinylethylbenzene, vinylxylene, vinylnaphthalene, and diphenylethylene. Among these, from the viewpoint of easy industrial availability, styrene is preferred. Regarding these vinyl-substituted aromatic compounds, one kind thereof may be used alone, or two or more kinds thereof may be used in combination.

It is preferable that the amount of use of the organomonolithium compound as a polymerization initiator is determined by the molecular weight of the target conjugated diene-based polymer or modified conjugated diene-based polymer. The amount of use of monomers such as a conjugated diene compound with respect to the amount of use of the polymerization initiator correlates to the degree of polymerization, that is, correlates to the number average molecular weight and/or weight average molecular weight. Therefore, in order to increase the molecular weight, adjustment may be made in the direction of decreasing the polymerization initiator, and in order to decrease the molecular weight, adjustment may be made in the direction of increasing the amount of the polymerization initiator.

From the viewpoints of easy industrial availability and easy control of the polymerization reaction, the organomonolithium compound is preferably an alkyllithium compound. In this case, a conjugated diene-based polymer having an alkyl group at the polymerization initiation terminal is obtained. Examples of the alkyllithium compound include n-butyllithium, sec-butyllithium, tert-butyllithium, n-hexyllithium, benzyllithium, phenyllithium, and stilbene lithium. From the viewpoints of easy industrial availability and easy control of the polymerization, the alkyllithium compound is preferably n-butyllithium and sec-butyllithium. Regarding these organomonolithium compounds, one kind thereof may be used alone, or two or more kinds thereof may be used in combination.

In the polymerization step, examples of the polymerization reaction mode include batch type and continuous type polymerization reaction modes. With regard to the continuous type, one or two or more connected reactors can be used. Regarding a continuous type reactor, for example, a tank type reactor with a stirrer and a tubular reactor are used. With regard to the continuous type, preferably, monomers, an inert solvent, and a polymerization initiator are continuously fed into a reactor, a polymer solution including a polymer is obtained in the reactor, and the polymer solution is continuously discharged. With regard to the batch type reactor, for example, a tank type reactor with a stirrer is used. With regard to the batch type, preferably, monomers, an inert solvent, and a polymerization initiator are fed, monomers are continuously or intermittently added during polymerization as necessary, a polymer solution including a polymer is obtained in the reactor, and the polymer solution is discharged after completion of polymerization. According to the present embodiment, in order to obtain a conjugated diene-based polymer having an active terminal at a high proportion, the continuous type in which the polymer can be continuously discharged and subjected to a subsequent reaction in a short time period, is preferred.

In the polymerization step, it is preferable that polymerization is performed in an inert solvent. Examples of the solvent include hydrocarbon-based solvents such as a saturated hydrocarbon and an aromatic hydrocarbon. Specific examples of the hydrocarbon-based solvent are not limited to the following; however, examples include hydrocarbons consisting of aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and mixtures thereof. When allenes and acetylenes, which are impurities, are treated with organometallic compounds before being supplied to the polymerization reaction, it is preferable because a high concentration of a conjugated diene-based polymer having an active terminal tends to be obtained, and a modified conjugated diene-based polymer having a high modification ratio tends to be obtained.

In the polymerization step, a polar compound may be added. By adding a polar compound, an aromatic vinyl compound can be randomly copolymerized with a conjugated diene compound, and there is a tendency that the polar compound can be used also as a vinylating agent for controlling the microstructure of a conjugated diene moiety.

Regarding the polar compound, for example, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium-tert-amylate, potassium-tert-butylate, sodium-tert-butylate, and sodium amylate; and phosphine compounds such as triphenylphosphine can be used. Regarding these polar compounds, one kind thereof may be used alone, or two or more kinds thereof may be used in combination.

In the polymerization step, from the viewpoint of productivity, the polymerization temperature is preferably 0°C or higher, more preferably 120°C or lower, and particularly preferably 50°C or higher and 100°C or lower. When the polymerization temperature is in such a range, there is a tendency that a sufficient amount of reaction of the coupling agent with respect to the active terminal after completion of polymerization can be secured.

The amount of bonded conjugated dienes in the conjugated diene-based polymer or modified conjugated diene-based polymer (A1) is not particularly limited; however, the amount of bonded conjugated diene is preferably 40% by mass or more and 100% by mass or less, and more preferably 55% by mass or more and 80% by mass or less.

Furthermore, the amount of bonded aromatic vinyl in the conjugated diene-based polymer or modified conjugated diene-based polymer (A1) is not particularly limited; however, the amount of bonded aromatic vinyl is preferably 0% by mass or more and 60% by mass or less, and more preferably 20% by mass or more and 45% by mass or less.

When the amount of bonded conjugated diene and the amount of bonded aromatic vinyl are in the above-described ranges, the low hysteresis loss and abrasion resistance of the rubber composition can be further enhanced.

Incidentally, the amount of bonded aromatic vinyl can be measured by ultraviolet light absorption of a phenyl group, and from this, the amount of bonded conjugated diene can also be determined. Specifically, the amount of bonded aromatic vinyl is measured according to the method described in the Examples that will be described below.

The amount of vinyl bond in the conjugated diene bonded unit in the conjugated diene-based polymer or modified conjugated diene-based polymer (A1) is not particularly limited; however, the amount of vinyl bond is preferably 10 mol% or more and 75 mol% or less, and more preferably 20 mol% or more and 65 mol% or less. When the amount of vinyl bond is in the above-described range, the low hysteresis loss and abrasion resistance of the rubber composition can be further enhanced.

Incidentally, when the modified conjugated diene-based polymer (A1) is a copolymer of butadiene and styrene, the amount of vinyl bond (amount of 1,2-bond) in the butadiene bond unit can be determined by Hampton's method [R.R. Hampton, Analytical Chemistry, 21, 923 (1949)]. Specifically, the amount of vinyl bond is measured by the method described in the Examples that will be described below.

The modified conjugated diene-based polymer (A1) is preferably such that the glass transition temperature (Tg) is -45°C or higher and -15°C or lower. When the glass transition temperature (Tg) of the modified conjugated diene-based polymer (A1) is in the range of -45°C or higher and -15°C or lower, the low hysteresis loss and abrasion resistance of the rubber composition can be further enhanced.

Incidentally, with regard to the glass transition temperature, a DSC curve is recorded while increasing the temperature in a predetermined temperature range according to ISO 22768:2006, and the peak top (Inflection point) of the DSC differential curve is designated as glass transition temperature. Specifically, the glass transition temperature is measured by the method described in the Examples that will be described below.

It is preferable that the reactive compound (coupling agent) is preferably a pentafunctional or higher-functional reactive compound having a nitrogen atom and a silicon atom, and it is preferable that the reactive compound has at least three silicon-containing functional groups. A more preferred coupling agent is a compound in which at least one silicon atom constitutes an alkoxysilyl group having 1 to 20 carbon atoms or a silanol group, and the coupling agent is more preferably a compound represented by the above-described General Formula (1).

The alkoxysilyl group carried by the coupling agent reacts with, for example, an active terminal of a conjugated diene-based polymer, an alkoxylithium is dissociated, and a bond between a terminal of a conjugated diene-based polymer chain and silicon of a coupling residue tends to be formed. The value obtained by subtracting the number of SiOR's decreased by the reaction from the total number of SiOR's carried by one molecule of the coupling agent is the number of alkoxysilyl groups carried by the coupling residue. Furthermore, the azasilacycle group carried by the coupling agent forms a bond between a >N-Li bond as well as a conjugated diene-based polymer terminal, and the silicon of the coupling residue. Incidentally, the >N-Li bond tends to easily become >NH and LiOH by means of water and the like at the time of finishing. Furthermore, with regard to the coupling agent, there is a tendency that an alkoxysilyl group remaining unreacted may easily become a silanol (Si-OH group) by means of water and the like at the time of finishing.

The reaction temperature for the reaction step is preferably a temperature similar to the polymerization temperature for the conjugated diene-based polymer, and the reaction temperature is more preferably 0°C or higher and 120°C or lower, and even more preferably 50°C or higher and 100°C or lower. Furthermore, the temperature change occurring from after the polymerization step until the coupling agent is added is preferably 10°C or less, and more preferably 5°C or less.

The reaction time for the reaction step is preferably 10 seconds or more, and more preferably 30 seconds or more. It is preferable that the time from the completion of the polymerization step to the initiation of the reaction step is shorter from the viewpoint of the coupling ratio; however, the time is more preferably 5 minutes or less.

Mixing for the reaction step may be achieved by any of mechanical stirring, stirring by a static mixer, and the like. When the polymerization step is a continuous type process, it is preferable that the reaction step is also a continuous type process. Regarding the reactor for the reaction step, for example, a tank type reactor with a stirrer or a tubular reactor is used. The coupling agent may be diluted with an inert solvent and continuously supplied to the reactor. When the polymerization step is a batch type process, even in a method of introducing a coupling agent into the polymerization reactor, the reaction step may be carried out after transferring the reactor contents to another reactor.

In the General Formula (1), A is preferably represented by any one of the following General Formulae (2) to (5). When A is represented by any one of General Formulae (2) to (5), a modified conjugated diene-based polymer (A1)

having superior performance can be obtained.

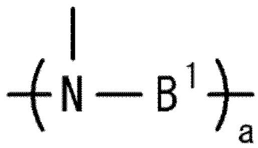

· · · (2)

In the General Formula (2), $B^1$ represents a single bond or a hydrocarbon group having 1 to 20 carbon atoms; and a represents an integer of 1 to 10. When there are a plurality of $B^1$'s, they are each independent.

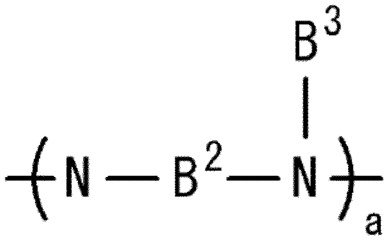

· · · (3)

In the General Formula (3), $B^2$ represents a single bond or a hydrocarbon group having 1 to 20 carbon atoms; $B^3$ represents an alkyl group having 1 to 20 carbon atoms; and a represents an integer of 1 to 10. When a plurality of $B^2$'s and a plurality of $B^3$'s are present, they are each independent.

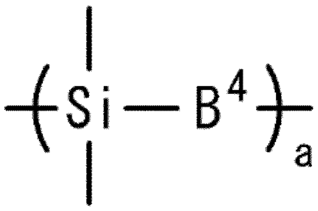

· · · (4)

In the General Formula (4), $B^4$ represents a single bond or a hydrocarbon group having 1 to 20 carbon atoms; and a represents an integer of 1 to 10. When a plurality of $B^4$'s are present, they are each independent.

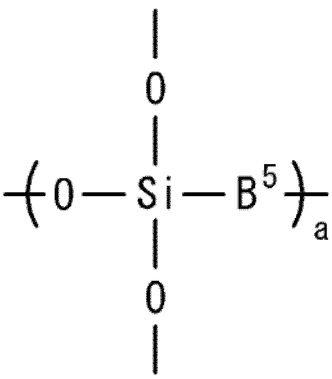

· · · (5)

In the General Formula (5), $B^5$ represents a single bond or a hydrocarbon group having 1 to 20 carbon atoms; and a represents an integer of 1 to 10. When a plurality of $B^5$'s are present, they are each independent.

Incidentally, with regard to $B^1$, $B^2$, $B^4$, and $B^5$ in the General Formulae (2) to (5), the hydrocarbon group having 1 to 20 carbon atoms may be an alkylene group having 1 to 20 carbon atoms or the like.

Preferably, in the General Formula (1), A is represented by the General Formula (2) or (3); and k represents 0.

More preferably, in the General Formula (1), A is represented by the General Formula (2) or (3); while k represents 0, and in the General Formula (2) or (3), a represents an integer of 2 to 10.

Even more preferably, in the General Formula (1), A is represented by the General Formula (2), while k represents 0, and in the General Formula (2), a represents an integer of 2 to 10.

Examples of such a coupling agent include bis(3-trimethoxysilylpropyl)-[3-(2,2-dimethoxy-1-aza-2-silacyclopentane)propyl]amine, tris(3-trimethoxysilylpropyl)amine, tris (3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trismethoxysilylpropyl)-methyl-1,3-propanediamine, and among these, tetrakis(3-trimethoxysilylpropyl)-1,3-propanediamine and tetrakis(3-trimethoxysilylpropyl)-1,3-bisaminomethylcyclohexane are particularly preferred.

The amount of addition of the compound represented by General Formula (1) as the coupling agent can be adjusted such that the number of moles of the conjugated diene-based polymer to the number of moles of the coupling agent react at a desired stoichiometric ratio, and as a result, a desired degree of branching tends to be achieved. It is preferable that the specific number of moles of the polymerization initiator is preferably 5.0 times by mole or more, and more preferably 6.0 times by mole or more, with respect to the number of moles of the coupling agent. In this case, in General Formula (1), the number of functional groups of the coupling agent ($(m - 1) \times i + p \times j + k$) is preferably an integer of 5 to 10, and more preferably an integer of 6 to 10.

In order to obtain the modified conjugated diene-based polymer (A1) having a specific polymer component, the molecular weight distribution (Mw/Mn) of the conjugated diene-based polymer may be set to be preferably 1.5 or more and 2.5 or less, and more preferably 1.8 or more and 2.2 or less. Furthermore, the obtainable modified conjugated diene-based polymer (A1) is preferably such that one peak is detected from the molecular weight curve obtained by GPC.

When the peak molecular weight obtained by GPC of the modified conjugated diene-based polymer (A1) is denoted as $Mp_1$, and the peak molecular weight of the conjugated diene-based polymer is denoted as $Mp_2$, it is preferable that the following formula is established.

$$(Mp_1/Mp_2) < 1.8 \times 10 - 12 \times (Mp_2 - 120 \times 10^4)^2 + 2$$

It is more preferable that $Mp_2$ is $20 \times 10^4$ or more and $80 \times 10^4$ or less, and $Mp_1$ is $30 \times 10^4$ or more and $150 \times 10^4$ or less. $Mp_1$ and $Mp_2$ are determined by the method described in the Examples that will be described below.

The modification ratio of the modified conjugated diene-based polymer (A1) is preferably 30% by mass or more, more preferably 50% by mass or more, and even more preferably 70% by mass or more. When the modification ratio is 30% by mass or more, the low hysteresis loss and abrasion resistance of the rubber composition can be further enhanced. Incidentally, the modification ratio is measured by the method described in the Examples that will be described below.

After the reaction step, a deactivating agent, a neutralizing agent, and the like may be added as necessary to the copolymer solution. The deactivating agent is not limited to the following; however, examples thereof include water; and alcohols such as methanol, ethanol, and isopropanol. The neutralizing agent is not limited to the following; however, examples thereof include carboxylic acids such as stearic acid, oleic acid, and versatic acid (a highly branched carboxylic acid mixture having 9 to 11 carbon atoms, mainly having 10 carbon atoms); an aqueous solution of an inorganic acid, and carbon dioxide gas.

Furthermore, from the viewpoint of preventing gel production after polymerization and from the viewpoint of enhancing stability during processing, it is preferable that, for example, an oxidation inhibitor such as 2,6-di-tert-butyl-4-hydroxytoluene (BHT), n-octadecyl-3-(4'-hydroxy-3',5'-di-tert-butylphenyl) propionate, or 2-methyl-4,6-bis[(octylthio)methyl]phenol is added to the modified conjugated diene-based polymer (A1).

Regarding a method of obtaining the modified conjugated diene-based polymer (A1) from the polymer solution, a known method can be used. Examples of the method include a method of separating the solvent by steam stripping or the like, subsequently separating the polymer by filtration, and dehydrating and drying the polymer to obtain the polymer; a method of concentrating the polymer solution in a flushing tank and devolatilizing the polymer solution by vent extrusion or the like; and a method of directly devolatilizing the polymer solution in a drum dryer or the like.

The modified conjugated diene-based polymer (A1) obtained by reacting the coupling agent represented by General Formula (1) with a conjugated diene-based polymer is represented by, for example, the following General Formula (6).

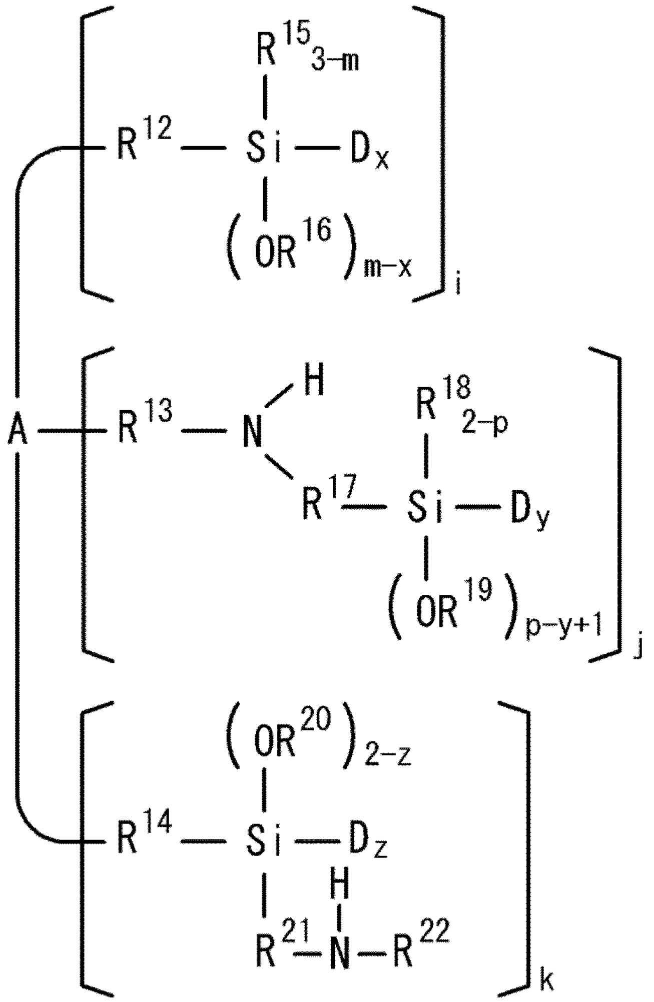

· · · (6)

In General Formula (6), D represents a conjugated diene-based polymer chain, and it is preferable that the weight average molecular weight of the conjugated diene-based polymer chain is $10\times10^4$ to $100\times10^4$. The conjugated diene-based polymer chain is a constituent unit of the modified conjugated diene-based polymer and is, for example, a structural unit derived from a conjugated diene-based polymer, which is produced by reacting a conjugated diene-based polymer with a coupling agent.

$R^{12}$, $R^{13}$, and $R^{14}$ each independently represent a single bond or an alkylene group having 1 to 20 carbon atoms; $R^{15}$ and $R^{18}$ each independently represent an alkyl group having 1 to 20 carbon atoms; $R^{16}$, $R^{19}$, and $R^{20}$ each independently represent a hydrogen atom or an alkyl group having 1 to 20 carbon atoms; $R^{17}$ and $R^{21}$ each independently represent an alkylene group having 1 to 20 carbon atoms; and $R^{22}$ represents a hydrogen atom or an alkyl group having 1 to 20 carbon atoms. m and x each represent an integer of 1 to 3; $x \leq m$; p represents 1 or 2; y represents an integer of 1 to 3; $y \leq (p + 1)$; and z represents an integer of 1 or 2. When pluralities of D, $R^{12}$ to $R^{22}$, m, p, x, y, and z are present, they may be each independent and may be the same or different. Furthermore, i represents an integer of 0 to 6; j represents an integer of 0 to 6; k represents an integer of 0 to 6; $(i + j + k)$ represents an integer of 3 to 10; and $((x \times i) + (y \times j) + (z \times k))$ represents an integer of 5 to 30. A represents a hydrocarbon group having 1 to 20 carbon atoms, or an organic group that has at least one atom selected from the group consisting of an oxygen atom, a nitrogen atom, a silicon atom, a sulfur atom, and a phosphorus atom and does not have active hydrogen. The hydrocarbon group represented by A includes saturated, unsaturated, aliphatic, and aromatic hydrocarbon groups. Examples of the organic group that does not have active hydrogen include organic groups that do not have functional groups having active hydrogen, such as a hydroxy group (-OH), a secondary amino group (>NH), a primary amino group ($-NH_2$), and a sulfhydryl group (-SH).

In the General Formula (6), it is preferable that A is represented by any one of the General Formulae (2) to (5). When A is represented by any one of General Formulae (2) to (5), the low hysteresis loss and abrasion resistance of the rubber composition can be further enhanced.

At least one selected from the modified styrene-butadiene rubber is modified by at least one selected from the group consisting of N,N-bis(trimethylsilyl)-3-[diethoxy(methyl)silyl]propylamine, N-(1,3-dimethylbutylidene)-3-triethoxysilyl- 1-propanamine, and tetrakis(3-trimethoxysilylpropyl)-1,3-propanediamine.

The modification site of aminoalkoxysilane-modified SBR may be a molecule terminal or may be the main chain; however, it is preferable that a terminal of styrene-butadiene rubber (SBR) is modified.

As described above, the rubber component may contain a modified styrene-butadiene rubber other than aminoalkoxysilane-modification.

From the viewpoint of having high affinity for the filler (for example, silica), the modified styrene-butadiene rubber is preferably such that a terminal of a styrene-butadiene rubber is modified with a silane compound. Examples of the silane compound include a silane compound having a glycidoxy group, an alkoxysilane compound, and a hydrocarbyloxysilane compound.

When a terminal of a styrene-butadiene rubber is modified with a silane compound, the modified styrene-butadiene rubber has an increased interaction with silica.

The modification site of the modified styrene-butadiene rubber may be a molecular terminal or may be the main chain; however, it is preferable that a terminal of a styrene-butadiene rubber is modified.

[Filler]

The rubber composition according to the present invention contains a filler that reinforces the rubber composition. As the rubber composition contains a filler, the strength of a vulcanized rubber portion in which the rubber composition is vulcanized can be increased.

The content of the filler in the rubber composition is 40 to 125 parts by mass per 100 parts by mass of the rubber component.

When the content of the filler in the rubber composition is less than 40 parts by mass per 100 parts by mass of the rubber component, tire reinforcement is insufficiently achieved, and the rolling resistance cannot be lowered. When the content is more than 125 parts by mass, the elastic modulus of the tire becomes too high, and the grippability on wet road surfaces is not excellent.

From the viewpoint of further lowering the rolling resistance, the content of the filler in the rubber composition is preferably 40 parts by mass or more, more preferably 50 parts by mass or more, even more preferably 55 parts by mass or more, and still more preferably 60 parts by mass or more per 100 parts by mass of the rubber component. Furthermore, from the viewpoint of enhancing the grippability on wet road surfaces, the content of the filler in the rubber composition is preferably 120 parts by mass or less, more preferably 105 parts by mass or less, even more preferably 98 parts by mass or less, still more preferably 92 parts by mass or less, and even more preferably 85 parts by mass or less per 100 parts by mass of the rubber component.

<Silica>

The filler contains a silica having a nitrogen adsorption specific surface area (BET method) of 80 $m^2/g$ or more and less than 130 $m^2/g$.

When the nitrogen adsorption specific surface area (BET method) of silica is less than 80 $m^2/g$, silica particles become too large and cannot sufficiently reinforce the tire, and the rolling resistance cannot be lowered. On the other hand, when the nitrogen adsorption specific surface area (BET method) of silica is 130 $m^2/g$ or more, the tire becomes too hard, and satisfactory grippability on wet road surfaces cannot be obtained.

From the viewpoint of further lowering the rolling resistance, the nitrogen adsorption specific surface area (BET method) of the silica is preferably 93 $m^2/g$ or more, more preferably 98 $m^2/g$ or more, and even more preferably 103 $m^2/g$ or more. Furthermore, from the viewpoint of improving the grip performance on wet road surfaces, the nitrogen adsorption specific surface area (BET method) of the silica is preferably 125 $m^2/g$ or less, more preferably 118 $m^2/g$ or less, and even more preferably 113 $m^2/g$ or less.

The silica is not particularly limited as long as the nitrogen adsorption specific surface area (BET method) is 80 $m^2/g$ or more and less than 130 $m^2/g$, and examples thereof include wet method silica (hydrated silicic acid), dry method silica (anhydrous silicic acid), calcium silicate, and aluminum silicate, while among these, wet method silica is preferred. Regarding these silicas, one kind thereof may be used alone, or two or more kinds thereof may be used in combination.

From the viewpoint of enhancing the mechanical strength of the tire and further lowering the rolling resistance, the content of the silica in the rubber composition is preferably 40 parts by mass or more, and more preferably 50 parts by mass or more per 100 parts by mass of the rubber component. Furthermore, from the viewpoint of enhancing the grip performance on wet road surfaces, the content of the silica in the rubber composition is preferably 105 parts by mass or less, more preferably 100 parts by mass or less, and even more preferably 90 parts by mass or less per 100 parts by mass of the rubber component.

<Carbon black>

It is preferable that the filler further includes carbon black. The filler refers to the total amount of silica and carbon black. It is preferable that silica is included such that the content of silica in the filler is in the range of 70% by mass or more. When the content of the silica in the filler is 70% by mass or more, the mechanical strength of the tire can be enhanced, and the rolling resistance can be further lowered. The content percentage of the silica in the filler is more preferably 80% or more, even more preferably 85% or more, and still more preferably 90% or more.
Carbon black reinforces vulcanized rubber and enhances the abrasion resistance of vulcanized rubber.
The carbon black is not particularly limited, and examples include carbon blacks of GPF, FEF, HAF, ISAF, and SAF grades. These carbon blacks may be used singly, or two or more kinds thereof may be used in combination.
From the viewpoint of enhancing the abrasion resistance of vulcanized rubber, the content of carbon black in the rubber composition is preferably 1 part by mass or more, more preferably 3 parts by mass or more, and even more preferably 5 parts by mass or more per 100 parts by mass of the rubber component. Furthermore, from the viewpoint of decreasing the rolling resistance, the content of carbon black in the rubber composition is preferably 20 parts by mass or less, more preferably 15 parts by mass or less, and even more preferably 10 parts by mass or less, or 7 parts by mass or less per 100 parts by mass of the rubber component.
The filler may also include an inorganic filler such as, for example, clay, talc, calcium carbonate, or aluminum hydroxide, in addition to silica and carbon black.

[Hydrogenated resin]

The rubber composition contains a hydrogenated resin having a softening point of higher than 110°C and having a weight average molecular weight as converted to polystyrene of 200 to 1200. The content of the hydrogenated resin in the rubber composition is 5 to 50 parts by mass per 100 parts by mass of the rubber component.
When the softening point of the hydrogenated resin is 110°C or lower, the tire cannot be sufficiently reinforced, and the rolling resistance cannot be lowered. From the viewpoint of further lowering the rolling resistance, the softening point of the hydrogenated resin is preferably 115°C or higher, more preferably 118°C or higher, even more preferably 123°C or higher, and particularly preferably 125°C or higher. Furthermore, from the viewpoint of the grip performance on wet road surfaces, the softening point of the hydrogenated resin is preferably 145°C or lower, more preferably 138°C or lower, and even more preferably 133°C or lower.
When the weight average molecular weight as converted to polystyrene of the hydrogenated resin is less than 200, the hydrogenated resin is precipitated out from the tire, while the effect brought by the hydrogenated resin cannot be sufficiently exhibited, and when the weight average molecular weight as converted to polystyrene is more than 1200, the hydrogenated resin is not compatible with the rubber component.
From the viewpoint of suppressing precipitation of the hydrogenated resin from the tire and suppressing deterioration of the external appearance of the tire, the weight average molecular weight as converted to polystyrene of the hydrogenated resin is preferably 500 or more, more preferably 550 or more, even more preferably 620 or more, still more preferably 670 or more, even more preferably 720 or more, still more preferably 750 or more, and even more preferably 780 or more. Furthermore, from the viewpoint of increasing the compatibility of the hydrogenated resin with the rubber component and further enhancing the effect brought by the hydrogenated resin, the weight average molecular weight as converted to polystyrene of the hydrogenated resin is preferably 1100 or less, more preferably 1050 or less, even more preferably 950 or less, still more preferably 900 or less, and even more preferably 850 or less.
The softening point ($T_{SHR}$) (unit is °C) of the hydrogenated resin with respect to the weight average molecular weight as converted to polystyrene ($Mw_{HR}$) (unit is g/mol) of the hydrogenated resin is preferably 0.15 or greater [0.15 ≤ ($TS_{HR}/MW_{HR}$)] .
When ($Ts_{HR}/Mw_{HR}$) is small, the hydrogenated resin is precipitated, the external appearance of the tire may be defective, and the wet grip performance may be deteriorated. From the viewpoints of the external appearance of the tire and the wet grip performance, ($T_{SHR}/M_{WHR}$) is more preferably 0.155 or greater, even more preferably 0.158 or greater, still more preferably 0.160 or greater, and even more preferably 0.162 or greater. Furthermore, from the viewpoint of obtaining satisfactory wet grip performance, ($T_{SHR}/M_{WHR}$) is preferably 0.2 or less, more preferably 0.185 or less, even more preferably 0.178 or less, still more preferably 0.172 or less, even more preferably 0.168 or less, and still more preferably 0.163 or less.
When the content of the hydrogenated resin in the rubber composition is less than 5 parts by mass per 100 parts by mass of the rubber component, the effect brought by the hydrogenated resin cannot be exhibited, and when the content is more than 50 parts by mass, the hydrogenated resin is precipitated out from the tire, while the effect brought by the hydrogenated resin cannot be sufficiently exhibited.
From the viewpoint of further enhancing the effect brought by the hydrogenated resin, the content of the hydrogenated resin in the rubber composition is preferably 7 parts by mass or more, more preferably 9 parts by mass or

more, even more preferably 11 parts by mass or more, and still more preferably 13 parts by mass or more per 100 parts by mass of the rubber component. Furthermore, from the viewpoint of suppressing precipitation of the hydrogenated resin from the tire and suppressing deterioration of the external appearance of the tire, the content of the hydrogenated resin in the rubber composition is more preferably 40 parts by mass or less, even more preferably 35 parts by mass or less, still more preferably 30 parts by mass or less, even more preferably 25 parts by mass or less, and particularly preferably 20 parts by mass or less per 100 parts by mass of the rubber component.

A hydrogenated resin means a resin obtainable by subjecting a resin to reduction and hydrogenation.

Examples of the resin that is a raw material of the hydrogenated resin include a $C_5$-based resin, a $C_5$-$C_9$-based resin, a Cg-based resin, a terpene-based resin, a dicyclopentadiene-based resin, and a terpene aromatic compound-based resin, and regarding these resins, one kind thereof may be used alone, or two or more kinds thereof may be used in combination.

Examples of the $C_5$-based resin include an aliphatic petroleum resin obtainable by polymerizing a $C_5$ fraction obtainable by thermal cracking of naphtha in petrochemical industry.

The $C_5$ fraction usually includes olefin-based hydrocarbons such as 1-pentene, 2-pentene, 2-methyl-1-butene, 2-methyl-2-butene, and 3-methyl-1-butene; and diolefin-based hydrocarbons such as 2-methyl-1,3-butadiene, 1,2-pentadiene, 1,3-pentadiene, and 3-methyl-1,2-butadiene. Incidentally, regarding the $C_5$-based resin, commercially available products can be utilized.

The $C_5$-$C_9$-based resin refers to a $C_5$-$C_9$-based synthetic petroleum resin, and regarding the $C_5$-$C_9$-based resin, for example, a solid polymer obtainable by polymerizing a petroleum-derived $C_5$-$C_{11}$ fraction by using a Friedel-Crafts catalyst such as $AlCl_3$ or $BF_3$ may be mentioned. More specific examples include copolymers containing styrene, vinyltoluene, $\alpha$-methylstyrene, indene, and the like as main components.

Regarding the $C_5$-$C_9$-based resin, a resin having a reduced amount of $C_9$ or higher components is preferred from the viewpoint of the compatibility with the rubber component. Here, the phrase "a reduced amount of $C_9$ or higher components" implies that the proportion of the $C_9$ or higher components in the total amount of the resin is less than 50% by mass, and preferably 40% by mass or less. Regarding the $C_5$-$C_9$-based resin, commercially available products can be utilized.

Furthermore, the resin that is a raw material of the hydrogenated resin may include, for example, a resin obtainable by copolymerizing a $C_5$ fraction and dicyclopentadiene (DCPD) ($C_5$-DCPD-based resin).

Here, when the proportion of a dicyclopentadiene-derived component in the total amount of the resin is 50% by mass or more, it should be noted that the $C_5$-DCPD-based resin is included in the dicyclopentadiene-based resin. When the proportion of the dicyclopentadiene-derived component in the total amount of the resin is less than 50% by mass, it should be noted that the $C_5$-DCPD-based resin is included in the $C_5$-based resin. The same also applies to the case where a small amount of a third component and the like is further included.

From the viewpoint of increasing the compatibility between the rubber component and the hydrogenated resin, further enhancing the grippability on wet road surfaces, and further lowering the rolling resistance, the hydrogenated resin is preferably at least one selected from the group consisting of a hydrogenated $C_5$-based resin, a hydrogenated $C_5$-$C_9$-based resin, and a hydrogenated dicyclopentadiene-based resin (hydrogenated DCPD-based resin); more preferably at least one selected from the group consisting of a hydrogenated $C_5$-based resin and a hydrogenated $C_5$-$C_9$-based resin; and even more preferably a hydrogenated $C_5$-based resin.

[Silane coupling agent]

It is preferable that the rubber composition further contains a silane coupling agent.

Regarding the silane coupling agent, a silane coupling agent that is conventionally used in rubber industry can be used.

[Various components]

The rubber composition according to the present invention may contain the previously described rubber component, filler, and hydrogenated resin, as well as various components that are conventionally used in the rubber industry as necessary, for example, a softening agent, a resin other than the hydrogenated resin of the present invention, a processability improving agent, stearic acid, an aging inhibitor, zinc oxide, a vulcanization accelerator, and a vulcanizing agent, which are appropriately selected to the extent that does not impair the purpose of the present invention.

[Method of producing rubber composition]

A method of producing the rubber composition according to the present invention is not particularly limited; however, for example, the rubber composition can be produced by mixing various components that have been appropriately selected as necessary to the previously described rubber component, silica, and the hydrogenated resin of the present invention, and subjecting the mixture to kneading, heating, extrusion, and the like.

Examples

Hereinafter, the present invention will be described in more detail by way of Examples; however, these Examples are for the purpose of illustrating the present invention and are not intended to be limit the present invention.

[Preparation of rubber composition]

Each of rubber compositions of Examples and Comparative Examples was prepared with the mixing formulation shown in Table 1, by performing mixing in order of a first mixing step and a final mixing step by using a common Banbury mixer. After completion of the first mixing step, the mixture was first taken out from the Banbury mixer, subsequently the mixture was introduced again into the Banbury mixer, and the final mixing step was carried out. Furthermore, the maximum temperature of the mixture in the first mixing step was set to 170°C, and the maximum temperature of the rubber composition in the final mixing step was set to 110°C.

In Table 1, a blank portion means that the numerical value is 0. The details of each of the components shown in Table 1 are as follows.

[Rubber component]

NR: Natural rubber
Modified SBR with low amount of bonded styrene: Aminoalkoxysilane-modified styrene-butadiene rubber synthesized by the following method (amount of bonded styrene 10%)
Modified SBR with high amount of bonded styrene: Aminoalkoxysilane-modified styrene-butadiene rubber synthesized by the following method (amount of bonded styrene 35%)
Unmodified SBR with low amount of bonded styrene: Unmodified styrene-butadiene rubber, manufactured by Asahi Kasei Corp., trade name "TUFDENE 2000" (amount of bonded styrene 23.5%)
Unmodified SBR with high amount of bonded styrene: Unmodified styrene-butadiene rubber (amount of bonded styrene 35% or more)

[Filler]

Silica: BET silica having a specific surface area obtained by the following production method = 110 $m^2/g$
Carbon black: N234 grade carbon black

[Resin]

Resin 1: Hydrogenated C5 resin, manufactured by Eastman Chemical Company, trade name "Impera E1780 (registered trademark)", softening point = 130°C, weight average molecular weight (Mw) = 800
Resin 2: C5 resin, manufactured by Tonen Chemical Corp., corresponding to trade name "TrezRA100"
Aging inhibitor: Aging inhibitor including trade name "NOCRAC 6C" manufactured by Ouchi Shinko Chemical Industrial Co., Ltd.
Vulcanization accelerator: Vulcanization accelerator including a sulfenamide-based vulcanization accelerator

Each of the rubber compositions of Examples and Comparative Examples includes 2 parts by mass of wax and 2.5 parts by mass of zinc oxide as other components. Furthermore, each of the rubber compositions of Examples and Comparative Examples includes a silane coupling agent as the other component. In addition, in order to obtain an appropriate vulcanization rate, sulfur and a vulcanization retarder were added to each of the rubber compositions of Examples and Comparative Examples by adjusting the amounts in the range of 1.1 to 2.0 parts by mass for sulfur and in the range of 0.1 to 0.4 parts by mass for the vulcanization retarder.

(Method of synthesizing modified SBR with low amount of bonded styrene)

Into an 800-mL pressure-resistant glass container that had been dried and purged with nitrogen, a cyclohexane solution of 1,3-butadiene and a cyclohexane solution of styrene were introduced so as to provide 67.5 g of 1,3-butadiene and 7.5 g of styrene, 0.6 mmol of 2,2-ditetrahydrofurylpropane was added thereto, 0.8 mmol of n-butyllithium was added thereto, and then polymerization was performed for 1.5 hours at 50°C. In the polymerization reaction system in which the polymerization conversion ratio at this time almost reached 100%, 0.72 mmol of N,N-bis(trimethylsilyl)-3-[diethoxy(methyl)silyl]propylamine as a modifying agent was added thereto, and a modification reaction was performed for 30 minutes at 50°C. Subsequently, 2 mL of a 5 mass% isopropanol solution of 2,6-dit-butyl-p-cresol (BHT) was added thereto to terminate the reaction, and the resultant was dried according to a routine method to obtain a modified SBR with low amount of bonded styrene. The microstructure of the obtained modified polymer was determined by an infrared method (Morero method), and as a result, the amount of bonded styrene was 10% by mass.

(Method of synthesizing modified SBR with low amount of bonded styrene)

Into a 800-mL pressure-resistant glass container that had been dried and purged with nitrogen, a cyclohexane solution of 1,3-butadiene and a cyclohexane solution of styrene were introduced so as to provide 67.5 g of 1,3-butadiene and 7.5 g of styrene, 0.6 mmol of 2,2-ditetrahydrofurylpropane was added thereto, 0.8 mmol of n-butyllithium was added thereto, and then polymerization was performed for 1.5 hours at 50°C. In the polymerization reaction system in which the polymerization conversion ratio at this time almost reached 100%, 0.72 mmol of N-(1,3-dimethylbutylidene)-3-triethoxysilyl-1-propanamine as a modifying agent was added thereto, and a modification reaction was performed for 30 minutes at 50°C. Subsequently, 2 mL of a 5 mass% isopropanol solution of 2,6-dit-butyl-p-cresol (BHT) was added thereto to terminate the reaction, and the resultant was dried according to a routine method to obtain a modified SBR with low amount of bonded styrene 1. The microstructure of the obtained modified polymer was determined by an infrared method (Morero method), and as a result, the amount of bonded styrene was 35% by mass.

(Method of producing silica)

Into a 180-liter jacketed stainless steel reaction tank equipped with a stirrer, 65 liters of water and 1.25 liters of an aqueous solution of sodium silicate ($SiO_2$ 160 g/liter, $SiO_2/Na_2O$ molar ratio 3.3) were introduced, and the mixture was heated to 96°C. The $Na_2O$ concentration in the produced solution was 0.015 mol/liter.

While the temperature of this solution was maintained at 96°C, an aqueous solution of sodium silicate similar to the above-described one and sulfuric acid (18 mol/liter) were simultaneously added dropwise thereto, the aqueous solution of sodium silicate being added at a flow rate of 750 milliliters/min, and sulfuric acid being added at a flow rate of 33 milliliters/min. While adjusting the flow rates, a neutralization reaction was performed while maintaining the $Na_2O$ concentration in the reaction solution in the range of 0.005 to 0.035 mol/liter. The reaction solution began to become cloudy from the middle of the reaction, the viscosity increased after the lapse of 30 minutes, and then the reaction solution became a gel-like solution. Furthermore, addition was continued, and at 100 minutes, the reaction was terminated. The silica concentration in the produced solution was 85 g/liter. Subsequently, sulfuric acid similar to the above-described one was added until the pH of the solution reached 3, and a silicic acid slurry was obtained. The obtained silicic acid slurry was subjected to filtration through a filter press and washing with water to obtain a wet cake. Next, the wet cake was made into a slurry using an emulsifying apparatus, the slurry was dried in a spray type dryer, and silica that was wet method hydrous silicic acid was obtained.

[Vulcanization of rubber composition and evaluation of vulcanized rubber]

1. Rolling resistance

A vulcanized rubber obtained by vulcanizing a rubber composition at 145°C for 33 minutes was processed into a specimen having a size of 5 mm × 45 mm × 2 mm. For the vulcanized rubber specimen, the loss tangent (tan δ) of the vulcanized rubber specimen was measured under the conditions of distance between chucks: 10 mm, initial strain: 150 μm, dynamic strain: 1%, frequency: 52 Hz, and measurement temperature: 60°C, by using a spectrometer manufactured by Ueshima Seisakusho Co., Ltd. The tan δ of the vulcanized rubber specimen of Example 1 was taken as 100, and each of the measured values of Examples and Comparative Examples was indicated as an index. As the index is larger, the rolling resistance is smaller and satisfactory. The results are shown in Table 1.

2. Grippability on wet road surfaces (wet grip performance)

A vulcanized rubber obtained by vulcanizing a rubber composition at 145°C for 33 minutes was processed into a specimen having a size of 5 mm × 45 mm × 2 mm. For the vulcanized rubber specimen, the loss tangent (tan δ) of the vulcanized rubber specimen was measured under the conditions of distance between chucks: 10 mm, initial strain: 150 μm, dynamic strain: 1%, frequency: 52 Hz, and measurement temperature: 0°C, by using a spectrometer manufactured by Ueshima Seisakusho Co., Ltd. The tan δ of the vulcanized rubber specimen of Example 1 was taken as 100, and each of the measured values of Examples and Comparative Examples was indicated as an index. A larger index indicates that the resistance value is larger while the wet grip performance is superior.

Table 1

| | | Example 1 | Example 2 | Comparative Example 1 | Comparative Example 2 |
|---|---|---|---|---|---|
| Rubber component | NR | 70 | 50 | 50 | 70 |
| | Modified SBR with low amount of bonded styrene | 30 | 35 | | 30 |
| | Modified SBR with high amount of bonded styrene | | 15 | | |
| | Unmodified SBR with low amount of bonded styrene | | | 35 | |
| | Unmodified SBR with high amount of bonded styrene | | | 15 | |
| Filler | Carbon black | 5 | 5 | 5 | 5 |
| | Silica | 117 | 117 | 117 | 117 |
| | Total | 122 | 122 | 122 | 122 |
| Resin | Resin 1 (hydrogenated resin) | 16 | 16 | 16 | |
| | Resin 2 | | | | 16 |
| Rolling resistance | | 100 | 99 | 90 | 95 |
| Wet grip performance | | 100 | 104 | 102 | 100 |

From the results of the Examples shown in Table 1, it is understood that a tire having excellent grippability on wet road surfaces and having low rolling resistance is obtained by using the rubber composition according to the present invention.

Industrial Applicability

The present invention can be utilized for a tire, particularly for the tread rubber of a tire.

**Claims**

**1.** A tire obtained by using a rubber composition,
the rubber composition comprising:

a rubber component containing a rubber having an isoprene structure and an aminoalkoxysilane-modified styrene-butadiene rubber having an amount of bonded styrene of 15% by mass or less;

a filler containing a silica having a nitrogen adsorption specific surface area (BET method) of 80 $m^2/g$ or more and less than 130 $m^2/g$, the amount of the filler being 40 to 125 parts by mass per 100 parts by mass of the rubber component; and

a hydrogenated resin having a softening point of higher than 110°C and having a weight average molecular weight as converted to polystyrene of 200 to 1200, the amount of the hydrogenated resin being 5 to 50 parts

by mass per 100 parts by mass of the rubber component.

2. The tire according to claim 1, wherein the rubber component further includes an aminoalkoxysilane-modified styrene-butadiene rubber having an amount of bonded styrene of 30% by mass or more.

3. The tire according to claim 1 or 2, wherein the content of the aminoalkoxysilane-modified styrene-butadiene rubber in the rubber component is 10% to 90% by mass.

4. The tire according to any one of claims 1 to 3, wherein the content of the rubber having an isoprene structure in the rubber component is 10% to 90% by mass.

5. The tire according to any one of claims 1 to 4, wherein the filler further contains carbon black, and the content of the silica in the filler is 70% by mass or more.

6. The tire according to any one of claims 1 to 5, wherein the hydrogenated resin is at least one selected from the group consisting of a hydrogenated $C_5$-based resin, a hydrogenated $C_5$-$C_9$-based resin, and a hydrogenated dicyclopentadiene-based resin.

## Patentansprüche

1. Reifen, erhalten durch Verwendung einer Kautschukzusammensetzung, wobei die Kautschukzusammensetzung Folgendes umfasst:

   eine Kautschukkomponente, die einen Kautschuk, der eine Isopren-Struktur aufweist, und einen durch Aminoalkoxysilan modifizierten Styrol-Butadien-Kautschuk, der eine Menge von gebundenem Styrol von 15 Masse-% oder weniger aufweist, enthält;
   einen Füllstoff, der ein Siliziumdioxid enthält, das eine spezifische Stickstoffadsorptionsoberfläche (BET-Methode) von 80 $m^2/g$ oder mehr und weniger als 130 $m^2/g$ aufweist, wobei die Menge des Füllstoffs 40 bis 125 Masseanteile je 100 Masseanteile der Kautschukkomponente beträgt; und
   ein hydriertes Harz, das einen Erweichungspunkt höher als 110 °C aufweist und ein gewichtsgemitteltes Molekulargewicht, wie zu Polystyrol umgewandelt, von 200 bis 1 200 aufweist, wobei die Menge des hydrierten Harzes 5 bis 50 Masseanteile je 100 Masseanteile der Kautschukkomponente beträgt.

2. Reifen nach Anspruch 1, wobei die Kautschukkomponente ferner einen durch Aminoalkoxysilan modifizierten Styrol-Butadien-Kautschuk, der eine Menge von gebundenem Styrol von 30 Masse-% oder mehr aufweist, einschließt.

3. Reifen nach Anspruch 1 oder 2, wobei der Gehalt des durch Aminoalkoxysilan modifizierten Styrol-Butadien-Kautschuks in der Kautschukkomponente 10 Masse- % bis 90 Masse-% beträgt.

4. Reifen nach einem der Ansprüche 1 bis 3, wobei der Gehalt des Kautschuks, der eine Isopren-Struktur aufweist, in der Kautschukkomponente 10 Masse-% bis 90 Masse-% beträgt.

5. Reifen nach einem der Ansprüche 1 bis 4, wobei der Füllstoff ferner Ruß enthält, und der Gehalt des Siliziumdioxids in dem Füllstoff 70 Masse-% oder mehr beträgt.

6. Reifen nach einem der Ansprüche 1 bis 5, wobei das hydrierte Harz mindestens eines ist, das ausgewählt ist aus der Gruppe, die aus einem hydrierten Cs-basierten Harz, einem hydrierten $C_5$-$C_9$-basierten Harz und einem hydrierten Harz auf Basis von Dicyclopentadien besteht.

## Revendications

1. Pneumatique obtenu en utilisant une composition de caoutchouc, la composition de caoutchouc comprenant :

   un composant de caoutchouc contenant un caoutchouc ayant une structure d'isopropène et un caoutchouc de butadiène styrène modifié par un amino-alkoxysilane comportant une quantité de styrène lié de 15 % en masse

ou moins ;
une charge contenant une silice ayant une aire de surface spécifique à absorption d'azote (méthode BET) de 80 $m^2/g$ ou plus et de moins de 130 $m^2/g$, la quantité de la charge représentant 40 à 125 parties en masse pour 100 parties en masse du composant de caoutchouc ; et
une résine hydrogénée ayant un point de ramollissement supérieur à 110 °C et ayant un poids moléculaire moyen en poids converti en polystyrène compris entre 200 et 1 200, la quantité de résine hydrogénée représentant 5 à 50 parties en masse pour 100 parties en masse du composant de caoutchouc.

**2.** Pneumatique selon la revendication 1, dans lequel le composant de caoutchouc inclut en outre un caoutchouc de styrène butadiène modifié par un amino-alkoxysilane comportant une quantité de styrène lié de 30 % en masse ou plus.

**3.** Pneumatique selon les revendications 1 ou 2, dans lequel la teneur en caoutchouc de styrène butadiène modifié par un amino-alkoxysilane dans le composant de caoutchouc représente 10 % à 90 % en masse.

**4.** Pneumatique selon l'une quelconque des revendications 1 à 3, dans lequel la teneur en caoutchouc ayant une structure d'isoprène dans le composant de caoutchouc représente 10 % à 90 % en masse.

**5.** Pneumatique selon l'une quelconque des revendications 1 à 4, dans lequel la charge contient en outre du noir de carbone, et la teneur en silice dans la charge représente 70 % en masse ou plus.

**6.** Pneumatique selon l'une quelconque des revendications 1 à 5, dans lequel la résine hydrogénée est au moins une résine sélectionnée dans le groupe constitué d'une résine hydrogénée à base de $C_5$, d'une résine hydrogénée à base de $C_5$-$C_9$ et d'une résine hydrogénée à base de dicyclopentadiène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2787032 A
- WO 2015079703 A
- JP 2008184505 A
- WO 2003046020 A
- JP 2007217562 A


### Non-patent literature cited in the description


- **R.R. HAMPTON.** *Analytical Chemistry,* 1949, vol. 21, 923